# EUROPEAN PATENT APPLICATION

(11) **EP 2 141 712 A1**
(43) Date of publication of application: **06.01.2010**
(21) Application number: 08710505.2
(22) Date of filing: 29.02.2008
(51) Int. Cl.: H01G 9/038, H01G 9/035, H01L 31/04, H01M 10/36, H01M 14/00

(54) **ELECTROLYTE, AND ELECTROLYTE SOLUTION OR ELECTROCHEMICAL ELEMENT COMPRISING THE SAME**

(30) Priority: 28.03.2007 JP 2007084148; 15.11.2007 JP 2007296985
(71) Applicant: Sanyo Chemical Industries, Ltd., Kyoto-shi Kyoto 605-0995 (JP)
(72) Inventor: GUAN, Shiyou, Kyoto-shi Kyoto 605-0995 (JP); WATANABE, Junji, Kyoto-shi Kyoto 605-0995 (JP)
(74) Representative: Wilhelms · Kilian & Partner Patentanwälte
(86) International application number: PCT/JP2008/000402
(87) International publication number: WO 2008/120439

(57) **Abstract**

Disclosed herein is an electrolyte having excellent long-term reliability, a high withstanding voltage (a wide potential window), and high conductivity.

The electrolyte contains a quaternary ammonium salt represented by the following general formula (1): 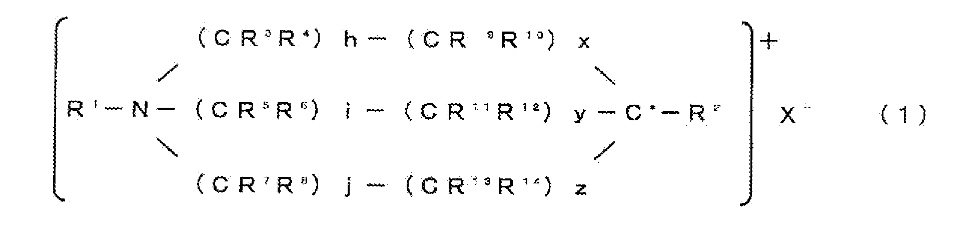 wherein R¹ represents a hydrocarbon group; R² represents a hydrocarbon group, a hydrogen atom, or a halogen atom; R³ to R¹⁴ each represent an alkyl group, a fluoroalkyl group, a hydrogen atom or a halogen atom, C and C* each represent a carbon atom, N represents a nitrogen atom; h, i, j, x, y, and z are each an integer of 0 to 6, (h+x) is an integer of 0 to 6, (i+y) and (j+z) are each an integer of 1 to 6; and X⁻ represents a counter anion having a HOMO energy of -0.60 to - 0.20 a.u. as determined by the first-principle calculation on molecular orbital of the counter anion.

## Description

### TECHNICAL FIELD

The present invention relates to an electrolyte containing a quaternary ammonium salt. More specifically, the present invention relates to an electrolyte suitable for use in electrolytic solutions for electrochemical devices.

### BACKGROUND ART

Electrochemical devices are to store electrochemical energy therein and intended to include cells to output electric energy from chemical energy stored therein, capacitors to output electric energy from electrostatic energy stored therein, dye-sensitized solar cells, and so on.
In conventional capacitors, tetraethylammonium tetrafluoroborate, triethylmethylammonium tetrafluoroborate, 1-ethyl-3-methylimidazolium tetrafluoroborate, or the like is used as an electrolyte. Particularly in the field of new applications using large current under harsh conditions, such as hybrid electric cars, there has been a crying need for the development of an electrolyte having higher long-term reliability, higher withstand voltage (wider potential window) and higher electrical conductivity.

Under the circumstances, it is known that a nonaqueous electrolytic solution for electrochemical capacitors uses a spiro-ammonium electrolyte to prevent deterioration of performance over time (to improve long-term reliability) (see, for example. Patent Literature 1).
On the other hand, it is also known that an electrolytic solution for electrolytic capacitors, which has high electrical conductivity, contains a cation having a specific cyclic structure and an aliphatic saturated dicarboxylate anion for the purpose of preventing deterioration of performance over time (improving long-term reliability) (see, for example, Patent Literatures 2 and 3).

Patent Literature 1: Japanese Unexamined Patent Publication (JP-A) No. 2005-175239
Patent Literature 2: JP-A No. 02-069913
Patent Literature 3: JP-A No. 02-069921

### DISCLOSURE OF INVENTION

### Problems to be Solved by the Invention

In some cases, however, the withstand voltage is insufficient even when the nonaqueous electrolytic solution described in Patent Literature 1 is used, and electrochemical capacitors using this electrolytic solution may undergo deterioration of performance over time.
The withstand voltage may also be insufficient even when the nonaqueous electrolytic solution described in Patent Literatures 2 and 3 is used, and electrochemical capacitors using this electrolytic solution may undergo deterioration of performance over time.
Therefore, an object of the present invention is to provide an electrolyte having high long-term reliability and high withstand voltage (wide potential window).

### Means for Solving the Problems

As a result of study to solve the problems, the present inventors have made the present invention disclosed herein. Thus, the present invention is directed to an electrolyte (B) including a quaternary ammonium salt (A) represented by the general formula (1) below, an electrolytic solution containing the electrolyte (B), and an electrochemical device using the electrolytic solution.

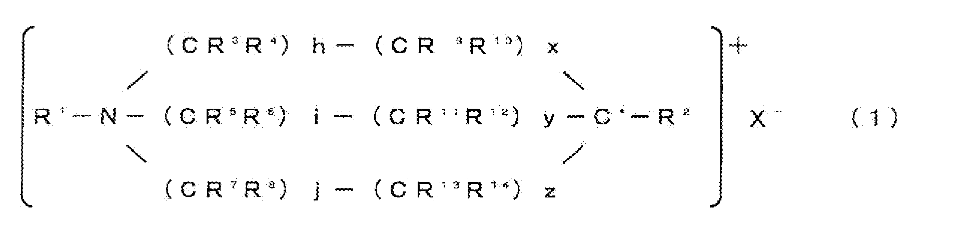

In the general formula (1), R¹ represents a monovalent hydrocarbon or fluoroalkyl group having 1 to 10 carbon atoms, which may have at least one group selected from the group consisting of a halogen atom, a hydroxyl group, a nitro group, a cyano group, and a group having an ether bond; R² represents a monovalent hydrocarbon group having 1 to 10 carbon atoms, which may have at least one group selected from the group consisting of a halogen atom, a nitro group, a cyano group, and a group having an ether bond, a hydrogen atom, or a halogen atom; R³ to R¹⁴ each represent an alkyl group having 1 to 5 carbon atoms, a fluoroalkyl group having 1 to 5 carbon atoms, a hydrogen atom, or a halogen atom, and may be the same or different from each other; C and C* each represent a carbon atom; N represents a nitrogen atom; h, i, j, x, y, and z are each an integer of 0 to 6 and may be the same or different from each other; (h+x) is an integer of 0 to 6; (i+y) and (j+z) are each an integer of 1 to 6, provided that when (h+x) is 0, the nitrogen atom N is directly bonded to the carbon atom C*; and X⁻ represents a counter anion having a HOMO energy of -0.60 to -0.20 a.u. as determined by the first-principle calculation on molecular orbital of the counter ion.

### Advantageous Effects of Invention

Since the electrolyte of the present invention has very high withstand voltage, electrochemical devices that are less likely to undergo deterioration of performance over time (or have high long-term reliability) can be easily produced using the electrolyte of the present invention. Therefore, electrochemical devices having high energy density and good charge-discharge cycle characteristics can be easily obtained using the electrolyte of the present invention.

### BEST MODE FOR CARRYING OUT THE INVENTION

The present invention is described in detail below.
The quaternary ammonium salt (A) represented by the general formula (1) includes: a cation having a specific ring structure and a nitrogen atom located at the center of the cation and sterically protected by the alkyl groups; and an anion having high oxidation potential. According to a molecular orbital calculation, therefore, the cation have a high LUMO value and the anion have a high HOMO value, respectively, as compared with conventional electrolytes. Thus, the quaternary ammonium salt (A) has a large difference between oxidation and reduction potentials and is resistant to oxidation and reduction and electrochemically stable so that it exhibits the property of having a very high withstand voltage when used in an electrolytic solution.

A description is given of the electrolyte (B) including the quaternary ammonium salt (A) represented by the general formula (1).
Examples of the monovalent hydrocarbon group (R¹) having 1 to 10 carbon atoms, which may have at least one group selected from the group consisting of a halogen atom (a fluorine atom, a chlorine atom, a bromine atom, or the like), a hydroxyl group, a nitro group, a cyano group, and a group having an ether bond (a methoxy group, an ethoxy group, or the like), include a straight-chain aliphatic hydrocarbon group, a branched-chain aliphatic hydrocarbon group, an alicyclic hydrocarbon group, and an aromatic hydrocarbon group. Examples of R¹ are listed below.

Examples of the straight-chain aliphatic hydrocarbon group include methyl, ethyl, n-propyl, n-butyl, n-pentyl, n-hexyl, n-decyl, hydroxymethyl, 1-hydroxyethyl, 2-hydroxyethyl, nitromethyl, nitroethyl, cyanomethyl, cyanoethyl, methoxymethyl, methoxyethyl, and so on.

Examples of the branched-chain aliphatic hydrocarbon group include isopropyl, 2-methylpropyl, 2-butyl, 2-pentyl, 2-methylbutyl, 3-methylbutyl, 3-pentyl, 2-methylbutyl, 1-methylpentyl, 2-methylpentyl, 3-methylpentyl, 4-methylpentyl, 3-heptyl, 2-ethylbutyl, 3-methylpentyl, 3-hexyl, 2-ethylhexyl, 1,2-dimethylbutyl, 1,3-dimethylbutyl, 2,3-dimethylbutyl, 2-ethyloctyl, 2-hydroxy-isopropyl, 1-hydroxy-2-methylpropyl, 2-amino-isopropyl, 2-nitro-isopropyl, 1-nitro-2-methylpropyl, 2-cyano-isopropyl, 1-cyano-2-m-ethylpropyl, 2-methoxy-isopropyl, 1-methoxy-2-methylpropyl, and so on.

Examples of the cyclic hydrocarbon group include cyclohexyl, 1-methylcyclohexyl, 2-methylcyclohexyl, 3-methylcyclohexyl, 4-methylcyclohexyl, 1-hydroxycyclohexyl, 2-hydroxycyclohexyl, 3-hydroxycyclohexyl, 4-hydroxycyclohexyl, 1-methoxycyclohexyl, 2-methoxycyclohexyl, 3-methoxycyclohexyl, 4-methoxycyclohexyl, and so on.

Examples of the aromatic hydrocarbon group include phenyl, toluyl, benzyl, and so on.

Examples of the hydrocarbon group having a halogen atom include fluoroalkyl and so on. Examples of fluoroalkyl include groups represented by the formula CₙF₂ₙ₊₁, wherein n is an integer of 1 to 10, such as trifluoromethyl, pentafluoroethyl and heptafluoropropyl.

Of these R¹ groups, preferred are the straight-chain aliphatic hydrocarbon group and the branched-chain aliphatic hydrocarbon group, more preferred are methyl, ethyl, methoxyethyl, trifluoromethyl, and pentafluoroethyl, particularly preferred are methyl, ethyl, trifluoromethyl, and pentafluoroethyl, and most preferred is methyl.

Examples of the monovalent hydrocarbon group having 1 to 10 carbon atoms, which may have at least one group selected from the group consisting of a halogen atom (a fluorine atom, a chlorine atom, a bromine atom, or the like), a nitro group, a cyano group, and a group having an ether bond (a methoxy group, an ethoxy group or the like), the hydrogen atom, or the halogen atom (a fluorine atom, a chlorine atom, a bromine atom, or the like) (R²) include a hydrocarbon group (R¹), a hydrogen atom, a halogen atom, and so on.

Of these R² groups, preferred are a hydrogen atom, a straight-chain aliphatic hydrocarbon group and a branched-chain aliphatic hydrocarbon group, more preferred are a hydrogen atom, methyl, ethyl, methoxyethyl, trifluoromethyl, and pentafluoroethyl, particularly preferred are a hydrogen atom, methyl, ethyl, trifluoromethyl, and pentafluoroethyl, and most preferred is a hydrogen atom.

Examples of the alkyl group having 1 to 5 carbon atoms (a straight-chain aliphatic hydrocarbon group, a branched-chain aliphatic hydrocarbon group, or the like), the fluoroalkyl group having 1 to 5 carbon atoms, the hydrogen atom, or the halogen atom (R³ to R¹⁴) include methyl, ethyl, n-propyl, n-butyl, n-pentyl, isopropyl, 2-methylpropyl, 2-butyl, 2-pentyl, 2-methylbutyl, 3-methylbutyl, 3-pentyl, 2-methylbutyl, trifluoromethyl, pentafluoroethyl, n-heptafluoropropyl, a hydrogen atom, a fluorine atom, a chlorine atom, a bromine atom, an iodine atom, and so on.

Of these, preferred are methyl, ethyl, n-propyl, trifluoromethyl, pentafluoroethyl, heptafluoropropyl, a hydrogen atom, and a fluorine atom, more preferred are methyl, trifluoromethyl, a hydrogen atom, and a fluorine atom, particularly preferred are a hydrogen atom and a fluorine atom, and most preferred is a hydrogen atom. The R³ to R¹⁴ groups may be the same or different from each other.

Each of (i+y) and (j+z) is preferably from 2 to 4, and more preferably 2 or 3, and (h+x) is preferably from 0 to 4, and more preferably an integer of 0 to 2.

Some examples of the cation that forms the quaternary ammonium salt (A) represented by the general formula (1) are shown in the tables below.
In the tables, Me represents a methyl group, Et an ethyl group, fM a trifluoromethyl group, fE a pentafluoromethyl group, and H a hydrogen atom.

**Table 1**

| | a1 | a2 | a3 | a4 | a5 | a6 | a7 | a8 | a9 | a10 | a11 | a12 |
|---|---|---|---|---|---|---|---|---|---|---|---|---|
| R¹ | Me | Me | Me | Et | Et | Et | fM | fM | fM | fM | Me | Me |
| R² | H | H | H | H | H | H | H | H | H | F | H | Et |
| R³ | H | H | H | H | H | H | H | H | H | F | Me | H |
| R⁴ | H | H | H | H | H | H | H | H | H | F | Me | H |
| R⁵ | H | H | H | H | H | H | H | H | H | F | H | H |
| R⁶ | H | H | H | H | H | H | H | H | H | F | H | H |
| R⁷ | H | H | H | H | H | H | H | H | H | F | H | H |
| R⁸ | H | H | H | H | H | H | H | H | H | F | H | H |
| R⁹ | - | - | - | - | - | - | - | - | - | - | H | - |
| R¹⁰ | - | - | - | - | - | - | - | - | - | - | H | - |
| R¹¹ | - | - | - | - | - | - | - | - | - | - | - | - |
| R¹² | - | - | - | - | - | - | - | - | - | - | - | - |
| R¹³ | - | - | - | - | - | - | - | - | - | - | - | - |
| R¹⁴ | - | - | - | - | - | - | - | - | - | - | - | - |
| h | 2 | 3 | 2 | 2 | 3 | 2 | 2 | 3 | 2 | 2 | 1 | 2 |
| i | 2 | 2 | 2 | 2 | 2 | 2 | 2 | 2 | 2 | 2 | 2 | 2 |
| j | 2 | 2 | 1 | 2 | 2 | 1 | 2 | 2 | 1 | 2 | 2 | 2 |
| x | 0 | 0 | 0 | 0 | 0 | 0 | 0 | 0 | 0 | 0 | 1 | 0 |
| y | 0 | 0 | 0 | 0 | 0 | 0 | 0 | 0 | 0 | 0 | 0 | 0 |
| z | 0 | 0 | 0 | 0 | 0 | 0 | 0 | 0 | 0 | 0 | 0 | 0 |

**Table 2**

| | a13 | a14 | a15 | a16 | a17 | a18 | a19 | a20 | a21 | a22 | a23 | a24 | a25 |
|---|---|---|---|---|---|---|---|---|---|---|---|---|---|
| R¹ | fE | Me | Me | Me | Et | Et | Et | fM | fM | fM | fE | Me | fM |
| R² | H | H | H | H | H | H | H | H | H | H | H | H | F |
| R³ | Et | - | - | - | - | - | - | - | - | - | - | - | - |
| R⁴ | H | - | - | - | - | - | - | - | - | - | - | - | - |
| R⁵ | H | H | H | H | H | H | H | H | H | H | H | Me | F |
| R⁶ | H | H | H | H | H | H | H | H | H | H | H | H | F |
| R⁷ | H | H | H | H | H | H | H | H | H | H | H | Me | F |
| R⁸ | H | H | H | H | H | H | H | H | H | H | H | H | F |
| R⁹ | H | - | - | - | - | - | - | - | - | - | - | - | - |
| R¹⁰ | H | - | - | - | - | - | - | - | - | - | - | - | - |
| R¹¹ | - | - | - | - | - | - | - | - | - | - | - | H | - |
| R¹² | - | - | - | - | - | - | - | - | - | - | - | H | - |
| R¹³ | - | - | - | - | - | - | - | - | - | - | - | H | - |
| R¹⁴ | - | - | - | - | - | - | - | - | - | - | - | H | - |
| h | 2 | 0 | 0 | 0 | 0 | 0 | 0 | 0 | 0 | 0 | 0 | 0 | 0 |
| i | 2 | 3 | 4 | 4 | 3 | 4 | 4 | 3 | 4 | 4 | 3 | 1 | 3 |
| j | 2 | 3 | 3 | 4 | 3 | 3 | 4 | 3 | 3 | 4 | 3 | 1 | 3 |
| x | 1 | 0 | 0 | 0 | 0 | 0 | 0 | 0 | 0 | 0 | 1 | 0 | 0 |
| y | 0 | 0 | 0 | 0 | 0 | 0 | 0 | 0 | 0 | 0 | 0 | 2 | 0 |
| z | 0 | 0 | 0 | 0 | 0 | 0 | 0 | 0 | 0 | 0 | 0 | 2 | 0 |

Of the examples of the cation shown above, (a1), (a2), (a3), (a4), (a5), (a6), (a7), (a8), (a14), (a15), (a16), (a17), (a18), (a19), (a20), (a21), and (a22) are preferred, and (a1), (a3), and (a14) are more preferred, from the viewpoint of electrochemical stability.

The cation (a1) forms a quaternary ammonium salt (A2) represented by the general formula (2):

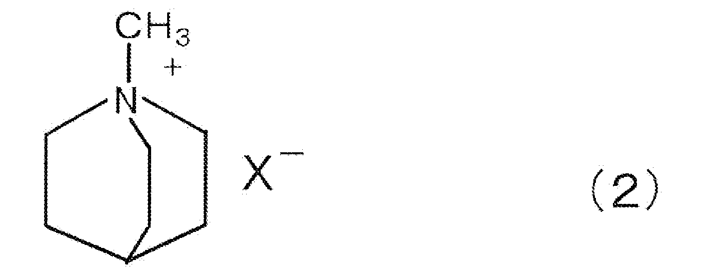

The cation (a3) forms a quaternary ammonium salt (A3) represented by the general formula (3):

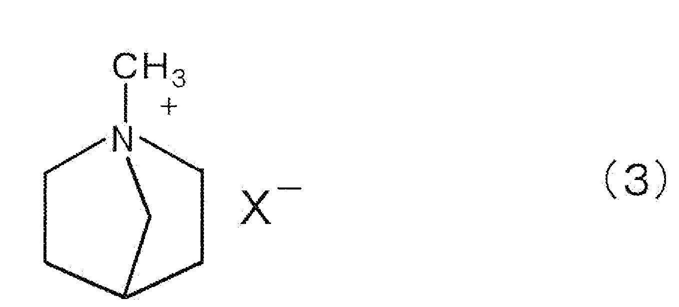

The cation (a14) forms a quaternary ammonium salt (A4) represented by the general formula (4):

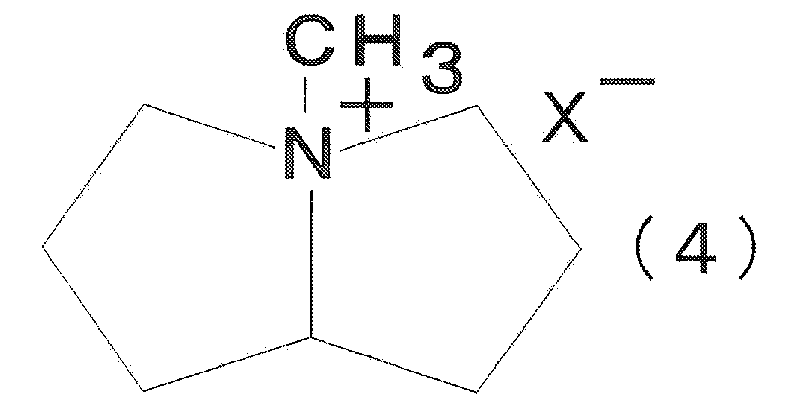

The cation (a2) forms a quaternary ammonium salt (A5) represented by the general formula (6):

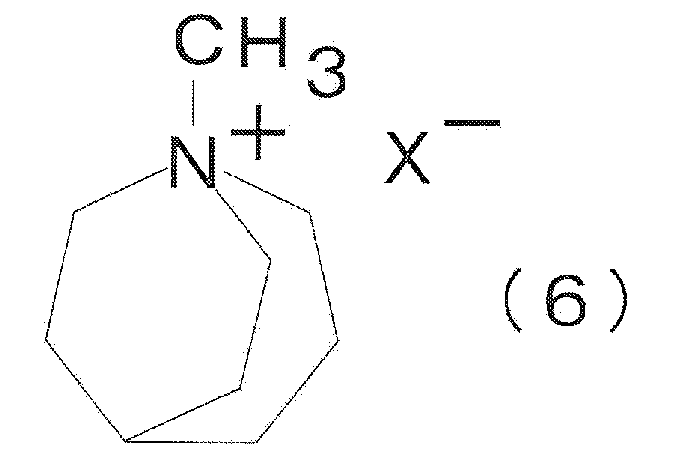

The cation (a4) forms an analog of the quaternary ammonium salt (A2) represented by the general formula (2), which has an ethyl group in place of the methyl group of the salt (A2).
The cation (a5) forms an analog of the quaternary ammonium salt (A5) represented by the general formula (6), which has an ethyl group in place of the methyl group of the salt (A5).
The cation (a6) forms an analog of the quaternary ammonium salt (A3) represented by the general formula (3), which has an ethyl group in place of the methyl group of the salt (A3).
The cation (a7) forms an analog of the quaternary ammonium salt (A2) represented by the general formula (2), which has a trifluoromethyl group in place of the methyl group of the salt (A2).
The cation (a8) forms an analog of the quaternary ammonium salt (A5) represented by the general formula (6), which has a trifluoromethyl group in place of the methyl group of the salt (A5).
The cation (a9) forms an analog of the quaternary ammonium salt (A3) represented by the general formula (3), which has a trifluoromethyl group in place of the methyl group of the salt (A3).

The cation (a15) forms a quaternary ammonium salt (A12) represented by the general formula (7):

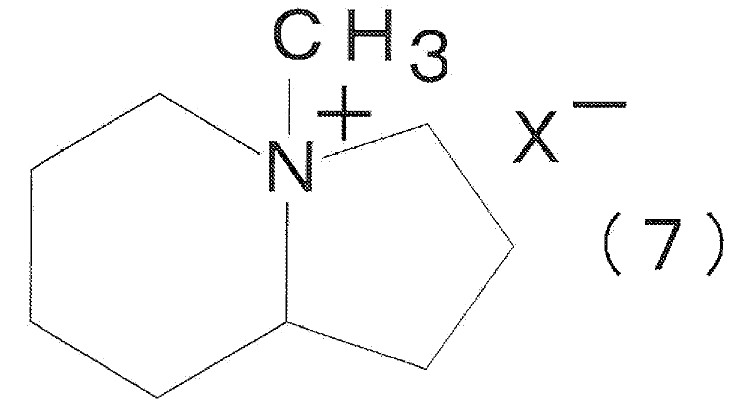

The cation (a16) forms a quaternary ammonium salt (A13) represented by the general formula (8):

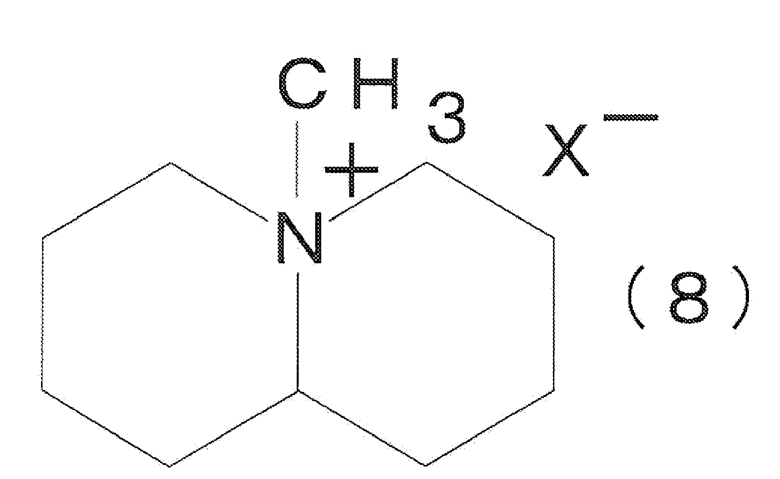

The cation (a17) forms an analog of the quaternary ammonium salt (A4) represented by the general formula (4), which has an ethyl group in place of the methyl group of the salt (A4).
The cation (a18) forms an analog of the quaternary ammonium salt (A12) represented by the general formula (7), which has an ethyl group in place of the methyl group of the salt (A12).
The cation (a19) forms an analog of the quaternary ammonium salt (A13) represented by the general formula (8), which has an ethyl group in place of the methyl group of the salt (A13).
The cation (a20) forms an analog of the quaternary ammonium salt (A4) represented by the general formula (4), which has a trifluoromethyl group in place of the methyl group of the salt (A4).
The cation (a21) forms an analog of the quaternary ammonium salt (A12) represented by the general formula (7), which has a trifluoromethyl group in place of the methyl group of the salt (A12).
The cation (a22) forms an analog of the quaternary ammonium salt (A13) represented by the general formula (8), which has a trifluoromethyl, group in place of the methyl group of the salt (A13).

A description is given of the counter anion (X⁻) that forms the quaternary ammonium salt (A) represented by the general formula (1).
The HOMO energy of the counter anion (X⁻) as determined by the first principle molecular orbital calculation (hereinafter abbreviated as HOMO energy) is from -0.60 to - 0.20 a.u., preferably from -0.60 to -0.25 a.u.

As used herein, the term "HOMO (highest occupied molecular orbital) energy as determined by the first principle molecular orbital calculation" refers to a value calculated by a process including performing a force field calculation for conformational analysis of the anion to be calculated, performing structural optimization according to AM1, i.e., a semi-empirical molecular orbital method, and then performing a calculation by the Hartree Fock method using 6-31G(d) as a basis function. Gaussian 03 (Gaussian, Inc.) may be used as the calculation program (reference literature 1: James B. Foresman and AEleen Frisch, "Exploring Chemistry with Electronic Structure Methods," Second Edition, translated in Japanese by Kenzo Tazaki, Gaussian, Inc., (the disclosure of the original published by Gaussian, Inc. in March 1998 is incorporated herein by reference.)).

Specific operational procedures for using Gaussian 03 to calculate the HOMO energy are shown below. First, the structural formula is prepared on the Gauss View screen. Next, on the Calculation screen, "Energy" for Job Type, "Ground State, Mechanics, UFF" for Method, "-1" for Charge, and "Singlet" for Spin are each selected or inputted to optimize the molecular structure of the prepared structural formula. On the same Calculate screen, "Optimization" for Job Type, "Ground State, Semi-empirical, Default Spin, AM1" for Method, "-1" for Charge, and "Singlet" for Spin are then each selected or inputted for further optimization. Subsequently, "Optimization" for Job Type, "Ground State, Hartree-Fock, Restricted" for Method, "6-31G, d" for Basis Set, "-1" for Charge, "Singlet" for Spin, "nonce" for Solvation, and "Pop=Reg" for Additional Keywords are each selected to calculate the molecular orbital energy of the optimized molecular structure in vacuum. Of the calculation results, the numeral value for the highest occupied molecular orbital is the HOMO energy. For example, when the calculation is performed on the anion BF₄⁻, a HOMO energy of -0.35 a.u. is obtained. As used herein, "a.u." is the atomic unit used in the Hartree-Fock method in quantum mechanics, and the energy unit is expressed in hartrees (1 hartree = 2625.5 kj·mol⁻¹ = 27.2 eV). In electrochemistry, the HOMO energy indicates the magnitude of oxidation potential. The smaller the HOMO energy of the anion (the larger its absolute value), the higher the electrochemical stability of the quaternary ammonium salt formed using the anion is.

Examples of the counter anion (X⁻) having a calculated HOMO energy in the range of -0.60 to -0.20 a.u. include BF₄⁻ <-0.35>, PF₆⁻ <-0.39>, AsF₆⁻, PCl₆⁻, BCl₄⁻, AsCl₆⁻, SbCl₆⁻, TaCl₆⁻, NbCl₆⁻, PBr₆⁻, BBr₄⁻, AsBr₆⁻ , AlBr₄⁻, TaBr₆⁻, NbBr₆⁻ , SbF₆⁻, AlF₄⁻, ClO₄⁻, AlCl₄⁻, TaF₆⁻, NbF₆⁻, CN⁻, F(HP)ₘ⁻, wherein m represents an integer of 1 to 4, an anion represented by N(RfSO₃)₂⁻ [e.g., CF₃SO₃⁻ (-0.27)], an anion represented by C(RfSO₃)₃⁻ [e.g., C(CF₃SO₃)₃⁻], an anion represented by RfSO₃⁻ (e.g., CF₃SO₃⁻), and an anion represented by RfCO₂⁻ (e.g., CF₃CO₂⁻), wherein the number in the parentheses <> indicates the HOMO energy (unit: a.u.).

In N(RfSO₃)₂⁻, C(RfSO₃)₃⁻, RfSO₃⁻, or RfCO₂⁻ representing an anion, Rf represents an fluoroalkyl group having 1 to 12 carbon atoms, such as trifluoromethyl, pentafluoroethyl, heptafluoropropyl, or nonafluorobutyl. Of these, trifluoromethyl, pentafluoroethyl, and heptafluoropropyl are preferred, trifluoromethyl and pentafluoroethyl are more preferred, and trifluoromethyl is particularly preferred.

Of these counter anions, BF₄⁻, PF₆⁻, or the counter anion represented by N(RfSO₃)₂⁻ is preferred from the viewpoint of electrochemical stability, PF₆⁻ or BF₄⁻ is more preferred, and BF₄⁻ is most preferred.

The counter anion preferably has small HOMO energy. There is no known compound having a HOMO energy of less than - 0.60 a.u., and, therefore, PF₆⁻, BF₄⁻, and CF₃SO₃⁻ are substantially preferred. On the other hand, counter anions having a HOMO energy of more than -0.20 a.u. (with a smaller absolute value), such as carboxylate anions such as formate, acetate, benzoate (HOMO energy = -0.18), phthalate, and succinate (HOMO energy = -0.18) anions; and inorganic anions such as I⁻ (HOMO energy = -0.16), Cl⁻ (HOMO energy = -0.12), and F⁻ (HOMO energy = -0.08) are not useful for electrochemical devices, because when they are used to form electrolytes, the resulting electrolytes may have low electrochemical stability and therefore low withstand voltage or low long-term reliability.

Examples of the quaternary ammonium salt (A) formed by a combination of any of the cations listed above and any of the anions listed above include a salt (1) composed the cation (a1) and BF₄, a salt (2) composed the cation (a2) and BF₄, a salt (3) composed the cation (a3) and BF⁴, a salt (4) composed the cation (a4) and BF₄, a salt (5) composed the cation (a5) and BF₄, a salt (6) composed the cation (a6) and BF₄, a salt (7) composed the cation (a7) and BF₄, a salt (8) composed the cation (a8) and BF₄, a salt (9) composed the cation (a9) and BF₄, a salt (10) composed the cation (a10) and BF₄ , a salt (11) composed the cation (a11) and BF₄, a salt (12) composed the cation (a12) and BF₄, a salt (13) composed the cation (a13) and BF₄, a salt (14) composed the cation (a14) and BF₄, a salt (15) composed the cation (a15) and BF₄, a salt (16) composed the cation (a16) and BF₄, a salt (17) composed the cation (a17) and BF₄, a salt (18) composed the cation (a18) and BF₄, a salt (19) composed the cation (a19) and BF₄, a salt (20) composed the cation (a20) and BF₄, a salt (21) composed the cation (a21) and BF₄, a salt (22) composed the cation (a22) and BF₄, a salt (23) composed the cation (a23) and BF₄, a salt (24) composed the cation (a25) and BF₄, a salt (25) composed the cation (a1) and PF₆, a salt (26) composed the cation (a2) and PF₆, a salt (27) composed the cation (a3) and PF₆, a salt (28) composed the cation (a4) and PF₆, a salt (29) composed the cation (a5) and PF₆, a salt (30) composed the cation (a6) and PF₆, a salt (31) composed the cation (a7) and PF₆, a salt (32) composed the cation (a8) and PF₆, a salt (33) composed the cation (a9) and PF₆, a salt (34) composed the cation (a10) and PF₆, a salt (35) composed the cation (a11) and PF₆, a salt (36) composed the cation (a12) and PF₆, a salt (37) composed the cation (a13) and PF₆, a salt (38) composed the cation (a14) and PF₆, a salt (39) composed the cation (a15) and PF₆, a salt (40) composed the cation (a16) and PF₆, a salt (41) composed the cation (a17) and PF₆, a salt (42) composed the cation (a18) and PF₆, a salt (43) composed the cation (a19) and PF₆, a salt (44) composed the cation (a20) and PF₆, a salt (45) composed the cation (a21) and PF₆, a salt (46) composed the cation (a22) and PF₆, a salt (47) composed the cation (a23) and PF₆, and a salt (48) composed the cation (a25) and PF₆.

Of these, the salts (1), (3), (14), (25), (27), and (38) are particularly preferred from the viewpoint of electrochemical stability.

The quaternary ammonium salt (A) may be a single salt or a mixture of two or more salts.

The quaternary ammonium salt (A) may be obtained by a method including quaternizing a tertiary amine represented by the general formula (5) below with a quaternizing agent (such as a dialkyl carbonate or an alkyl halide) and changing the carbonate anion (and/or the hydrogencarbonate anion) to the counter anion (X⁻) in the resulting quaternary ammonium salt (see, for example, Japanese Patent No. 3145049).

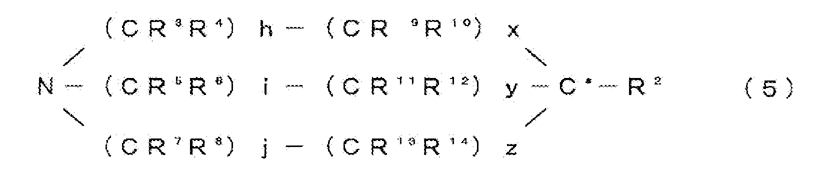

wherein H represents a hydrogen atom, and the characters other than H each have the same meaning as each corresponding character in the general formula (1).

The tertiary amine may be synthesized by known methods. In general, the methods (1) to (3) described below may be used (V. Prelog, Ann., 545, 229, 1940, the disclosure of which is incorporated herein by reference).

(1) A method including using hydrogen halide (such as hydrogen bromide) to halogenate a cyclic ether having a hydroxyalkyl group (such as 3-hydroxymethyltetrahydrofuran) and heating the resulting alkyl tri-halogenated compound together with methanolic ammonia in a sealed tube at 130 to 150ºC to eliminate hydrogen halide and cyclize the compound.

(2) A method including allowing hydrogen halide to react with a cyclic ether having an aminoalkyl group (such as 3-aminomethyltetrahydrofuran) and adding the resulting dihalogenated primary amine dropwise to an aqueous 0.1 N sodium hydroxide solution to eliminate hydrogen halide and cause an intramolecular cyclization reaction.

(3) A method including: using lithium aluminum hydride or the like to reduce a cyclic secondary amine having a carboxyalkyl group (such as 4-carboxymethylpiperidine or 3-carboxymethylpyrrolidine) (to reduce the carboxyl group to a hydroxyl group) or using sodium and ethanol or the like to reduce an aromatic amine having a carboxyalkyl group (such as 4-carboxymethylpyridine or 3-carboxymethylpyrrole) (to reduce the carboxyl group to a hydroxyl group and to reduce the aromatic ring), so that a cyclic secondary amine having a hydroxyalkyl group (such as 4-hydroxymethylpiperidine or 3-hydroxymethylpyrrolidine) is obtained; allowing hydrogen halide (such as hydrogen bromide or hydriodic acid) to react with the cyclic secondary amine to replace the hydroxyl group with the halogen atom, so that a halogenated cyclic secondary amine is obtained; and adding the halogenated cyclic secondary amine compound dropwise to an aqueous 0.1 N sodium hydroxide solution to eliminate hydrogen halide and to cause an intramolecular cyclization reaction.

The chemical structure and the purity of the quaternary ammonium salt (A) may be determined by general methods of organic chemistry such as ¹H-NMR (e.g., AVANCE 300 (Bruker Japan Co., Ltd.), deuterated dimethyl sulfoxide, 300 MHz), ¹⁹F-NMR (e.g., AL-300 (JEOL Ltd.), deuterated dimethyl sulfoxide, 300 MHz), and/or ¹³C-NMR (e.g., AL-300 (JEQL Ltd.), deuterated dimethyl sulfoxide, 300 MHz).

In addition to the quaternary ammonium salt (A), the electrolyte (B) may also contain an additional organic salt (D) other than the quaternary ammonium salt (A). The additional organic salt (D) may be an alkylammonium salt, an amidinium salt, or the like. Examples of the alkylammonium salt include salts of alkylammonium with BF₄ and salts of alkylammonium with PF₆, such as a salt of tetraethylammonium with BF₄ and a salt of triethylmethylammonium with BF₄. Examples of the amidinium salt include salts of imidazolium with BF₄ and salts of imidazolium with PF₆, such as a salt of 1,2,3-trimethylimidazolium with BF₄, a salt of 1-ethyl-2,3-dimethylimidazolium with BF₄ and a salt of 1,2,3,4-tetramethylimidazolium with BF₄.

The content (% by weight) of the additional organic salt (D) is preferably from 0 to 50% by weight, more preferably from 1 to 30% by weight, particularly preferably from 5 to 25% by weight, based on the weight of the electrolyte (B).

The electrolyte (B) may also contain any of various additives (E). Examples of the additive (E) include LiBF₄, LiPF₆, phosphoric acid, and derivatives thereof (such as phosphorous acid, phosphoric acid esters, and phosphonic acid), boric acid and derivatives thereof (such as boric acid oxide, boric esters, and a complex of boron and a compound having a hydroxyl group and/or a carboxyl group), a nitrate (such as lithium nitrate), and nitro compounds (such as nitrobenzoic acid, nitrophenol, nitrophenetole, nitroacetophenone, and aromatic nitro compounds). From the viewpoint of electrochemical stability and conductivity, the content (% by weight) of the additive (E) is preferably from 0 to 50% by weight, and more preferably from 0.1 to 20% by weight, based on the weight of the electrolyte (B).

The electrolytic solution of the present invention includes the electrolyte (B) and preferably includes the electrolyte (B) and a nonaqueous solvent (C).
From the viewpoint of the electrical conductivity of the electrolytic solution and the internal resistance of the electrochemical capacitor, the content (% by weight) of the electrolyte (B) is preferably from 3 to 100% by weight, more preferably from 5 to 80% by weight, particularly preferably from 10 to 50% by weight, and most preferably from 15 to 40% by weight, based on the weight of the electrolytic solution (the weight of the electrolyte (B) and the nonaqueous solvent (C)). The content (% by weight) of the nonaqueous solvent (C) is preferably from 0 to 97% by weight, more preferably from 20 to 95% by weight, particularly preferably from 50 to 90% by weight, and most preferably from 60 to 85% by weight, based on the weight of the electrolytic solution (the weight of the electrolyte (B) and the nonaqueous solvent (C)).

Some examples of the nonaqueous solvent (C) are shown below. Two or more of these solvents may be used in combination.

Ethers such as chain ethers (chain ethers of 2 to 6 carbon atoms, such as diethyl ether, methyl isopropyl ether, ethylene glycol dimethyl ether, and diethylene glycol dimethyl ether; and chain ethers of 7 to 12 carbon atoms, such as diethylene glycol diethyl ether and triethylene glycol dimethyl ether); cyclic ethers (cyclic ethers of 2 to 4 carbon atoms, such as tetrahydrofuran, 1,3-dioxolane and 1,4-dioxane; and cyclic ethers of 5 to 18 carbon atoms, such as 4-butyldioxolane and crown ethers).

Amides such as N,N-dimethylformamide, N,N-dimethylacetamide, N,N-dimethylpropionamide, hexamethylphosphorylamide, and N-methylpyrrolidone;

Carboxylic acid esters such as methyl acetate and methyl propionate;

Lactones such as γ-butyrolactone, a-acetyl-γ-butyrolactone, β-butyrolactone, γ-valerolactone, and d-valerolactone;

Nitriles such as acetonitrile, glutaronitrile, adiponitrile, methoxyacetonitrile, 3-methoxypropionitrile, acrylonitrile, and benzonitrile;

Carbonic acid esters such as ethylene carbonate, propylene carbonate, butylene carbonate, vinylene carbonate, dimethyl carbonate, methyl ethyl carbonate, and diethyl carbonate;

Sulfoxides such as dimethyl sulfoxide, sulfolane, 3-methylsulfolane, and 2,4-dimethylsulfolane;

Nitro compounds such as nitromethane and nitroethane;

Aromatic hydrocarbons such as toluene, xylene, chlorobenzene, 1,2-dichlorobenzene, 1,3-dichlorobenzene, and 1,4-dichlorobenzene;

Heterocyclic hydrocarbons such as N-methyl-2-oxazolidinone, 3,5-dimethyl-2-oxazolidinoe, 1,3-dimethyl-2-imidazolidinone, and N-methylpyrrolidinone;

Ketones such as acetone, 2,5-hexanedione and cyclohexanone; and

Phosphoric acid esters such as trimethyl phosphate, triethyl phosphate, and tripropyl phosphate.

Of these, preferred are nitriles, lactones, carbonic acid esters, sulfoxides, and aromatic hydrocarbons, and more preferred are propylene carbonate, ethylene carbonate, butylene carbonate, sulfolane, methylsulfolane, acetonitrile, γ-butyrolactone, dimethyl carbonate, ethyl methyl carbonate, diethyl carbonate, xylene, chlorobenzene, 1,2-dichlorobenzene, 1,3-dichlorobenzene, and 1,4-dichlorobenzene.

From the viewpoint of electrochemical stability, the content of water in the electrolytic solution of the present invention is preferably 300 ppm or less, more preferably 100 ppm or less, and particularly preferably 50 ppm or less, based on the volume of the electrolytic solution. In the above range, electrochemical capacitors can be prevented from undergoing performance degradation over time.

The content of water in the electrolytic solution may be measured by Karl Fischer method (JIS K 0113 (2005), coulometric titration method, partially corresponding to the international standard ISO 760 (1978), the disclosure of which is incorporated herein by reference).

Examples of methods for setting the water content of the electrolytic solution in the above range include methods of using the electrolyte (B) that is sufficiently dried in advance and optionally using a nonaqueous solvent that is sufficiently dehydrated in advance.

Methods for dehydrating the electrolyte include a method including drying the electrolyte by heating under reduced pressure (for example, heating under a reduced pressure of 2.7 kPa at 150ºC) to evaporate and remove a small amount of water from the electrolyte; and a method of performing recrystallization.

Methods for dehydrating the nonaqueous solvent include a method including dehydrating the nonaqueous solvent by heating under reduced pressure (for example, heating at 13 kPa) to evaporate and remove a small amount of water from the nonaqueous solvent; and a method of using a dehydrating agent (such as a molecular sieve (3A 1/16, Nacalai Tesque) or activated alumina powder).

Other methods include a method including dehydrating the electrolytic solution by heating under reduced pressure (for example, heating under a reduced pressure of 13 kPa at 100ºC) to evaporate and remove a small amount of water from the electrolytic solution; and a method of using a dehydrating agent.

One or more of these methods may be used alone or in combination. Of these methods, preferred are a method including highly purifying the electrolyte (B) by recrystallization and then drying the electrolyte (B) by heating under reduced pressure; and a method of adding a molecular sieve to the nonaqueous solvent (C) or the electrolytic solution.

The electrolytic solution including the electrolyte of the present invention may be used for electrochemical devices. The term "electrochemical devices" means electrochemical capacitors, secondary cells, dye-sensitized solar cells, and so on. An electrochemical capacitor includes electrodes, a current collector, and a separator as basic elements and optionally includes a case, a gasket, or any other element that is generally used for a capacitor. For example, the electrolytic solution may be infiltrated into electrodes and a separator in a glove box or the like under an argon gas atmosphere (dew point -50ºC).

Of electrochemical capacitors, the electrolytic solution of the present invention is particularly suitable for electric double-layer capacitors (which may use polarizing electrode materials such as activated carbon for the electrodes).

A basic structure for electric double-layer capacitors includes two polarizing electrodes, a separator placed between the electrodes, and the electrolytic solution infiltrated therein. The main component of the polarizing electrode is preferably a carbon material such as activated carbon, graphite, or a polyacene type organic semiconductor, because it should be electrochemically inert to the electrolytic solution and have an appropriate level of electrical conductivity. As described above, at least one of positive and negative electrodes should be made of a carbon material. A porous carbon material (such as activated carbon) having a specific surface area of 10 m²/g or more as determined by nitrogen absorption (BET) method is more preferred, because it can form a large electrode interface for charge storage. The specific surface area of the porous carbon material may be selected taking into account the desired capacitance per unit area (F/m²) and a bulk density reduction associated with an increase in the specific surface area. The carbon material preferably has a specific surface area of 30 to 2,500 m²/g as determined by nitrogen absorption (BET) method. Activated carbon having a specific surface area of 300 to 2,300 m²/g is particularly preferred, because it has great capacitance per volume.

The electrolytic solution of the present invention for electrochemical capacitors may also be used for aluminum electrolytic capacitors. A basic structure for aluminum electrolytic capacitors includes an aluminum foil serving as an electrode, an oxide film that is formed on the surface of the aluminum foil by electrochemical treatment to serve as a dielectric, another aluminum foil serving as another electrode, and an electrolytic solution-impregnated electrolytic paper material placed between the aluminum foils.

The electrochemical capacitor of the present invention may be in the form of a coin, a coil, or a rectangle. The electrolytic solution of the present invention for electrochemical capacitors may be used for any electric double-layer capacitor and any aluminum electrolytic capacitor.

### EXAMPLES

The present invention is more specifically described by the examples below, which are not intended to limit the scope of the present invention. Unless otherwise stated, the term "parts" means "parts by weight."

In the examples below, ¹H-NMR, ¹⁹F-NMR, and ¹³C-NMR measurements were performed by the methods described below. The ¹H-NMR measurement conditions were as follows: instrument, AVANCE 300 (Bruker Japan Co., Ltd.); solvent, deuterated dimethyl sulfoxide; frequency, 300 MHz.
The ¹⁹F-NMR measurement conditions were as follows: instrument, AL-300 (JEOL Ltd.); solvent, deuterated dimethyl sulfoxide; frequency, 300 MHz.
The ¹³C-NMR measurement conditions were as follows: instrument, AL-300 (JEOL Ltd.); solvent, deuterated dimethyl sulfoxide; frequency, 300 MHz.

### Example 1

### Synthesis of Quaternary Ammonium Iodide

To a glass beaker were added 113 parts of 1-azabicyclo[2,2,2]octane (Sigma-Aldrich Japan K.K.) and 339 parts of acetone to form a uniform solution. Under stirring, 156 parts of methyl iodide was slowly added dropwise to the solution and then stirred at 30ºC for 3 hours. The precipitated white solid was separated by filtration and dried under reduced pressure at 80ºC to give 255 parts of a quaternary ammonium salt (A2') represented by the general formula (2) (corresponding to (a1) in Table 1, wherein X⁻ is an iodide ion).

### Preparation of AgBF₄ Methanol Solution

A solution was prepared by mixing 116 parts of silver oxide and 209 parts of an aqueous 42% by weight fluoroboric acid solution and then dehydrated under reduced pressure at 100ºC to give a solid. The resulting solid was mixed with 550 parts of methanol to form an AgBF₄ methanol solution.

### Preparation of BF₄ Salt

Under mixing, 745 parts of the AgBF₄ methanol solution was slowly added dropwise to a mixed solution containing 253 parts of the quaternary ammonium salt (A2') and 253 parts of methanol. The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The silver and iodide ions were quantified using an atomic absorption spectrophotometer (AA-6200, Shimadzu Corporation) (the same applied to the examples described below).

The filtrate was desolvated under reduced pressure at 80ºC to give 206 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 147 parts of an electrolyte (A2-1) of the present invention. As a result of analysis by ¹H-NMR, ¹⁹F-NMR, and ¹³C-NMR, the electrolyte (A2-1) was identified as a quaternary ammonium salt represented by the general formula (2) (corresponding to (a1) in Table 1, wherein X⁻ is BF₄⁻ ion). The integrated value of the ¹H-NMR spectrum indicated a purity of 99% by mole.

### Dehydration of Solvent for Electrolytic Solution

Three parts of a molecular sieve (3A, 1/16, Nacalai Tesque, Inc. (the same was used in the examples described below)) was added to 100 parts of propylene carbonate and allowed to stand at 25ºC for 60 hours for drying. The molecular sieve was then separated by filtration, so that dehydrated propylene carbonate was obtained.

### Preparation of Electrolytic Solution

Twenty parts of the electrolyte (A2-1) was uniformly mixed and dissolved in 80 parts of the dehydrated propylene carbonate at 25ºC to form an electrolytic solution (1) of the present invention. The electrolytic solution (1) had a water content of 16 ppm.

### Example 2

### Dehydration of Solvents for Electrolytic Solution

Three parts of a molecular sieve was added to each of 100 parts of propylene carbonate and 100 parts of dimethyl carbonate and allowed to stand at 25ºC for 60 hours for drying. The molecular sieve was then separated by filtration, so that dehydrated propylene carbonate and dehydrated dimethyl carbonate were obtained.

### Preparation of Electrolytic Solution

Forty parts of the dehydrated propylene carbonate, 40 parts of the dehydrated dimethyl carbonate, and 20 parts of the electrolyte (A2-1) were uniformly mixed to form an electrolytic solution (2) of the present invention. The electrolytic solution (2) had a water content of 20 ppm.

### Example 3

### Dehydration of Solvent for Electrolytic Solution

Three parts of a molecular siege was added to 100 parts of sulfolane and allowed to stand at 25ºC for 60 hours for drying. The molecular sieve was then separated by filtration, so that dehydrated sulfolane was obtained.

### Preparation of Electrolytic Solution

Twenty parts of the electrolyte (A2-1) was uniformly mixed and dissolved in 80 parts of the dehydrated sulfolane at 25ºC to form an electrolytic solution (3) of the present invention. The electrolytic solution (3) had a water content of 17 ppm.

### Example 4

### Dehydration of Solvents for Electrolytic Solution

Three parts of a molecular sieve was added to each of 50 parts of ethylene carbonate and 50 parts of dimethyl carbonate and allowed to stand at 25ºC for 60 hours for drying. The molecular sieve was then separated by filtration, so that dehydrated ethylene carbonate and dehydrated dimethyl carbonate were obtained.

### Preparation of Electrolytic Solution

Forty parts of the dehydrated ethylene carbonate, 40 parts of the dehydrated dimethyl carbonate, and 20 parts of the electrolyte (A2-1) were uniformly mixed to form an electrolytic solution (4) of the present invention. The electrolytic solution (4) had a water content of 20 ppm.

### Example 5

### Dehydration of Solvent for Electrolytic Solution

Three parts of a molecular sieve was added to 100 parts of acetonitrile and allowed to stand at 25ºC for 60 hours for drying. The molecular sieve was then separated by filtration, so that dehydrated acetonitrile was obtained.

### Preparation of Electrolytic Solution

Twenty parts of the electrolyte (A2-1) was uniformly mixed and dissolved in 80 parts of the dehydrated acetonitrile at 25ºC to form an electrolytic solution (5) of the present invention. The electrolytic solution (5) had a water content of 16 ppm.

### Example 6

### Dehydration of Solvent for Electrolytic Solution

Three parts of a molecular sieve was added to 100 parts of 3-methylsulfolane and allowed to stand at 25ºC for 60 hours for drying. The molecular sieve was then separated by filtration, so that dehydrated 3-methylsulfolane was obtained.

### Preparation of Electrolytic Solution

Twenty parts of the electrolyte (A2-1) was uniformly mixed and dissolved in 80 parts of the dehydrated 3-methylsulfolane at 25ºC to form an electrolytic solution (6) of the present invention. The electrolytic solution (6) had a water content of 20 ppm.

### Example 7

### Dehydration of Solvents for Electrolytic Solution

Three parts of a molecular sieve was added to each of 50 parts of butylene carbonate and 50 parts of dimethyl carbonate and allowed to stand at 25ºC for 60 hours for drying. The molecular sieve was then separated by filtration, so that dehydrated butylene carbonate and dehydrated dimethyl carbonate were obtained.

### Preparation of Electrolytic Solution

Forty parts of the dehydrated butylene carbonate, 40 parts of the dehydrated dimethyl carbonate, and 20 parts of the electrolyte (A2-1) were uniformly mixed to form an electrolytic solution (7) of the present invention. The electrolytic solution (7) had a water content of 22 ppm.

### Example 8

### Dehydration of Solvents for Electrolytic Solution

Three parts of a molecular sieve was added to each of 50 parts of propylene carbonate and 100 parts of ethyl methyl carbonate and allowed to stand at 25ºC for 60 hours for drying. The molecular sieve was then separated by filtration, so that dehydrated propylene carbonate and dehydrated ethyl methyl carbonate were obtained.

### Preparation of Electrolytic Solution

Thirty-two parts of the dehydrated propylene carbonate, 48 parts of the dehydrated ethyl methyl carbonate, and 20 parts of the electrolyte (A2-1) were uniformly mixed to form an electrolytic solution (8) of the present invention. The electrolytic solution (8) had a water content of 18 ppm.

### Example 9

### Dehydration of Solvents for Electrolytic Solution

Three parts of a molecular sieve was added to each of 50 parts of propylene carbonate and 50 parts of γ**-**butyrolactone and allowed to stand at 25ºC for 60 hours for drying. The molecular sieve was then separated by filtration, so that dehydrated propylene carbonate and dehydrated γ-butyrolactone were obtained.

### Preparation of Electrolytic Solution

Forty parts of the dehydrated propylene carbonate, 40 parts of the dehydrated γ-butyrolactone, and 20 parts of the electrolyte (A2-1) were uniformly mixed to form an electrolytic solution (9) of the present invention. The electrolytic solution (9) had a water content of 27 ppm.

### Example 10

### Dehydration of Solvents for Electrolytic Solution

Three parts of a molecular sieve was added to each of 50 parts of propylene carbonate and 100 parts of diethyl carbonate and allowed to stand at 25ºC for 60 hours for drying. The molecular sieve was then separated by filtration, so that dehydrated propylene carbonate and dehydrated diethyl carbonate were obtained.

### Preparation of Electrolytic Solution

Twenty-four parts of the dehydrated propylene carbonate, 56 parts of the dehydrated diethyl carbonate, and 20 parts of the electrolyte (A2-1) were uniformly mixed to form an electrolytic solution (10) of the present invention. The electrolytic solution (10) had a water content of 22 ppm.

### Example 11

### Preparation of AgPF₆ Solution

An AgPF₆ methanol solution was obtained using the process of Example 1, except that 243 parts of an aqueous 60% by weight HPF₆ solution was used in place of 209 parts of an aqueous 42% by weight fluoroboric acid solution.

### Preparation of PF₆ Salt

Eight-hundred-and-three parts of the AgPF₆ methanol solution was gradually added to a mixed solution containing 253 parts of the quaternary ammonium salt (A2') and 255 parts of methanol. The mixture was then filtered, and the filtrate was collected. The AgPF₆ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 262 parts of a white crystal. The silver ion content and the iodide ion content of the crystal were 5 ppm or less and 10 ppm or less, respectively. Six hundred parts of methanol was added to the crystal, cooled to -5ºC and allowed to stand for 12 hours for recrystallization. The precipitated crystal was separated by filtration and dried under reduced pressure at 80ºC to give 194 parts of an electrolyte (A2-2) of the present invention. As a result of analysis by ¹H-NMR, ¹⁹F-NMR, and ¹³C-NMR, the electrolyte (A2-2) was identified as a quaternary ammonium salt represented by the general formula (2) (corresponding to (a1) in Table 1, wherein X⁻ is PF₆⁻ ion). The integrated value of the ¹H-NMR spectrum indicated a purity of 99% by mole.

### Preparation of Electrolytic Solution

Similarly to the method of Example 1, 20 parts of the electrolyte (A2-2) was uniformly mixed and dissolved in 80 parts of dehydrated propylene carbonate at 25ºC to form an electrolytic solution (11) of the present invention. The electrolytic solution (11) had a water content of 34 ppm.

### Example 12

### Preparation of AgCF₃SO₃ Solution

An AgCF₃SO₃ methanol solution was obtained using the process of Example 1, except that 250 parts of an aqueous 60% by weight CF₃SO₃H solution was used in place of 209 parts of an aqueous 42% by weight fluoroboric acid solution.

### Preparation of CF₃SO₃ Salt

Eight-hundred-and-seven parts of the AgCF₃SO₃ methanol solution was gradually added to a mixed solution containing 253 parts of the quaternary ammonium salt (A2') and 255 parts of methanol. The mixture was then filtered, and the filtrate was collected. The AgCF₃SO₃ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 265 parts of a white crystal. The silver ion content and the iodide ion content of the crystal were 5 ppm or less and 10 ppm or less, respectively. Six hundred parts of methanol was added to the crystal, cooled to -5ºC, and allowed to stand for 12 hours for recrystallization. The precipitated crystal was separated by filtration and dried under reduced pressure at 80ºC to give 196 parts of an electrolyte (A2-3) of the present invention. As a result of analysis by ¹H-NMR, ¹⁹F-NMR, and ¹³C-NMR, the electrolyte (A2-3) was identified as a quaternary ammonium salt represented by the general formula (2) (corresponding to (a1) in Table 1, wherein X⁻ is CF₃SO₃⁻ ion). The integrated value of the ¹H-NMR spectrum indicated a purity of 99% by mole.

### Preparation of Electrolytic Solution

Similarly to the method of Example 1, 20 parts of the electrolyte (A2-3) was uniformly mixed and dissolved in 80 parts of dehydrated propylene carbonate at 25ºC to form an electrolytic solution (12) of the present invention. The electrolytic solution (12) had a water content of 37 ppm.

### Example 13

### Synthesis of 1-Azabicyclo[3,2,2]Nonane

A mixture of 137 parts of 4-pyridinepropanol (4-(3-hydroxypropyl)pyridine, Sigma-Aldrich Japan K.K.) and 1,000 parts of ethanol was prepared, and 250 parts of sodium was gradually added to the mixture. The reaction solution was refluxed for 6 hours and then cooled to 30ºC. To the reaction solution was added 250 parts of water, and the ethanol was evaporated under reduced pressure at 70ºC. The resulting residue was mixed and extracted with 200 parts of diethyl ether. The extract was desolvated under reduced pressure at 30ºC to give a colorless viscous liquid. Two-hundred-and-fifty parts of an aqueous concentrated hydriodic acid solution was gradually added dropwise to 114 parts of the liquid. After the mixture was further refluxed for 3 hours, 350 parts of an aqueous 50% by weight sodium hydroxide solution was added to the mixture and heated at 50ºC for 3 hours, so that a reaction mixture was obtained. The reaction mixture was then cooled to 30ºC and mixed and extracted with 800 parts of diethyl ether. Sodium carbonate was then added to the ether layer for drying. Diethyl ether was removed from the dried ether layer under reduced pressure at 10ºC. The residue was then distilled (180ºC, 2.7 kPa), so that a distillation product was obtained. As a result of ¹H-NMR analysis of the distillation product, it was found that the raw material signal disappeared and that 1-azabicyclo[3,2,2]nonane was produced. The yield was 53% by weight.

### Synthesis of Quaternary Ammonium Iodide

To a glass beaker were added 125 parts of 1-azabicyclo[3,2,2]nonane and 375 parts of acetone to form a uniform solution. Under stirring, 156 parts of methyl iodide was slowly added dropwise to the solution and then stirred at 30ºC for 3 hours. The precipitated white solid was separated by filtration and dried under reduced pressure at 80ºCto give 267 parts of a quaternary ammonium salt (A5') represented by the general formula (6) (corresponding to (a2) in Table 1, wherein X⁻ is an iodide ion).

### Preparation of BF₄ Salt

Under mixing, 745 parts of an AgBF₄ methanol solution (obtained in the same manner as in Example 1) was slowly added dropwise to a mixed solution containing 267 parts of the quaternary ammonium salt (A5') and 267 parts of methanol. The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 218 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 155 parts of an electrolyte (A5-1) of the present invention. As a result of analysis by ¹H-NMR, ¹⁹F-NMR, and ¹³C-NMR, the electrolyte (A5-1) was identified as a quaternary ammonium salt represented by the general formula (6) (corresponding to (a2) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A5-1) was uniformly mixed and dissolved in 80 parts of dehydrated propylene carbonate at 25ºC to form an electrolytic solution (13) of the present invention. The electrolytic solution (13) had a water content of 32 ppm.

### Example 14

### Synthesis of 1-Azabicyclo[2,2,1]Heptane

A mixture of 110 parts of 4-pyridinemethanol (4-hydroxymethylpyridine, Sigma-Aldrich Japan K.K.) and 1,000 parts of ethanol was prepared, and 250 parts of sodium was gradually added to the mixture. The reaction solution was refluxed for 6 hours and then cooled to 30ºC. To the reaction solution was added 250 parts of water, and the ethanol was evaporated under reduced pressure. The resulting residue was mixed and extracted with 200 parts of diethyl ether. The extract was desolvated under reduced pressure at 30ºC to give a colorless viscous liquid. Two-hundred-and-fifty parts of an aqueous concentrated hydriodic acid solution was gradually added dropwise to 114 parts of the liquid. After the mixture was further refluxed for 3 hours, 350 parts of an aqueous 50% by weight sodium hydroxide solution was added to the mixture and heated at 50ºC for 3 hours, so that a reaction mixture was obtained. The reaction mixture was then cooled to 30ºC and mixed and extracted with 800 parts of diethyl ether. Sodium carbonate was then added to the ether layer for drying. Diethyl ether was removed from the dried ether layer under reduced pressure at 10ºC. The residue was then distilled (140ºC, 2.7 kPa), so that a distillation product was obtained. As a result of ¹H-NMR analysis of the distillation product, it was found that the raw material signal disappeared and that 1-azabicyclo[2,2,1]heptane was produced. The yield was 40% by weight.

### Synthesis of Quaternary Ammonium Iodide

To a glass beaker were added 100 parts of 1-azabicyclo[2,2,1]heptane and 300 parts of acetone to form a uniform solution. Under stirring, 156 parts of methyl iodide was slowly added dropwise to the solution and then stirred at 30ºC for 3 hours. The precipitated white solid was separated by filtration and dried under reduced pressure at 80ºC to give 242 parts of a quaternary ammonium salt (A3') represented by the general formula (3) (corresponding to (a3) in Table 1, wherein X⁻ is an iodide ion).

### Preparation of BF₄ Salt

Under mixing, 745 parts of an AgBF₄ methanol solution (obtained in the same manner as in Example 1) was slowly added dropwise to a mixed solution containing 239 parts of the quaternary ammonium salt (A3') and 239 parts of methanol. The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 194 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 138 parts of an electrolyte (A3-1) of the present invention. As a result of analysis by ¹H-NMR, ¹⁹F-NMR, and ¹³C-NMR. the electrolyte (A3-1) was identified as a quaternary ammonium salt represented by the general formula (3) (corresponding to (a3) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A3-1) was uniformly mixed and dissolved in 80 parts of dehydrated propylene carbonate at 25ºC to form an electrolytic solution (14) of the present invention. The electrolytic solution (14) had a water content of 36 ppm.

### Example 15

### Dehydration of Solvents for Electrolytic Solution

Three parts of a molecular sieve was added to each of 100 parts of propylene carbonate and 100 parts of dimethyl carbonate and allowed to stand at 25ºC for 60 hours for drying. The molecular sieve was then separated by filtration, so that dehydrated propylene carbonate and dehydrated dimethyl carbonate were obtained.

### Preparation of Electrolytic Solution

Forty parts of the dehydrated propylene carbonate, 40 parts of the dehydrated dimethyl carbonate and 20 parts of the electrolyte (A3-1) were uniformly mixed to form an electrolytic solution (15) of the present invention. The electrolytic solution (15) had a water content of 20 ppm.

### Example 16

### Preparation of PF₆ Salt

Eight-hundred-and-three parts of an AgPF₆ methanol solution (obtained in the same manner as in Example 11) was gradually added to a mixed solution containing 253 parts of the quaternary ammonium salt (A3') and 255 parts of methanol. The mixture was then filtered, and the filtrate was collected. The AgPF₆ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolated under reduced pressure at 80ºC to give 262 parts of a white crystal. The silver ion content and the iodide ion content of the crystal were 5 ppm or less and 10 ppm or less, respectively. Six hundred parts of methanol was added to the crystal, cooled to -5ºC, and allowed to stand for 12 hours for recrystallization. The precipitated crystal was separated by filtration and dried under reduced pressure at 80ºC to give 194 parts of an electrolyte (A3-2) of the present invention. As a result of analysis by ¹H-NMR, ¹⁹F-NMR, and ¹³C-NMR, the electrolyte (A3-2) was identified as a quaternary ammonium salt represented by the general formula (3) (corresponding to (a3) in Table 1, wherein X⁻ is PF₆⁻ ion). The integrated value of the ¹H-NMR spectrum indicated a purity of 99% by mole.

### Preparation of Electrolytic Solution

Twenty parts of the electrolyte (A3-2) was uniformly mixed and dissolved in 80 parts of dehydrated propylene carbonate at 25ºC to form an electrolytic solution (16) of the present invention. The electrolytic solution (16) had a water content of 30 ppm.

### Example 17

### Preparation of CF₃SO₃ Salt

Eight-hundred-and-seven parts of an AgCF₃SO₃ methanol solution (obtained in the same manner as in Example 12) was gradually added to a mixed solution containing 253 parts of the quaternary ammonium salt (A3') and methanol. The mixture was then filtered, and the filtrate was collected. The AgCF₃SO₃ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 265 parts of a white crystal. The silver ion content and the iodide ion content of the crystal were 5 ppm or less and 10 ppm or less, respectively. Six hundred parts of methanol was added to the crystal, cooled to -5ºC, and allowed to stand for 12 hours for recrystallization. The precipitated crystal was separated by filtration and dried under reduced pressure at 80ºC to give 196 parts of an electrolyte (A3-3) of the present invention. As a result of analysis by ¹H-NMR, ¹⁹F-NMR, and ¹³C-NMR, the electrolyte (A3-3) was identified as a quaternary ammonium salt represented by the general formula (3) (corresponding to (a3) in Table 1, wherein X⁻ is CF₃SO₃⁻ ion). The integrated value of the ¹H-NMR spectrum indicated a purity of 99% by mole.

### Preparation of Electrolytic Solution

Twenty parts of the electrolyte (A3-3) was uniformly mixed and dissolved in 80 parts of dehydrated propylene carbonate at 25ºC to form an electrolytic solution (17) of the present invention. The electrolytic solution (17) had a water content of 32 ppm.

### Example 18

### Synthesis of Quaternary Ammonium Iodide

To a glass beaker were added 113 parts of 1-azabicyclo[2,2,2]octane (Sigma-Aldrich Japan K.K.) and 339 parts of acetone to form a uniform solution. Under stirring, 172 parts of ethyl iodide was then slowly added dropwise to the solution and stirred at 30ºC for 3 hours. The precipitated white solid was separated by filtration and dried under reduced pressure at 80ºto give 269 parts of a quaternary ammonium salt (A6') (having an ethyl group in place of the methyl group of the quaternary ammonium salt represented by the general formula (2) and corresponding to (a4) in Table 1, wherein X⁻ is an iodide ion).

### Preparation of BF₄ Salt

A mixed solution containing 267 parts of the quaternary ammonium salt (A6') and 267 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 218 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 156 parts of an electrolyte (A6-1) of the present invention. As a result of analysis by ¹H-NMR, ¹⁹F-NMR, and ¹³C-NMR, the electrolyte (A6-1) was identified as a quaternary ammonium salt (having an ethyl group in place of the methyl group of the quaternary ammonium salt represented by the general formula (2) and corresponding to (a4) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A6-1) was uniformly mixed and dissolved in 80 parts of dehydrated propylene carbonate at 25ºC to form an electrolytic solution (18) of the present invention. The electrolytic solution (18) had a water content of 35 ppm.

### Example 19

### Synthesis of Quaternary Ammonium Iodide

To a glass beaker were added 125 parts of 1-azabicyclo[3,2,2]nonane (obtained in the same manner as in Example 13) and 375 parts of acetone to form a uniform solution. Under stirring, 172 parts of ethyl iodide was then slowly added dropwise to the solution and stirred at 30ºC for 3 hours. The precipitated white solid was separated by filtration and dried under reduced pressure at 80ºC to give 281 parts of a quaternary ammonium salt (A7') (having an ethyl group in place of the methyl group of the quaternary ammonium salt represented by the general formula (6) and corresponding to (a5) in Table 1, wherein X⁻ is an iodide ion).

### Preparation of BF₄ Salt

A mixed solution containing 267 parts of the quaternary ammonium salt (A7') and 267 parts of methanol was slowly mixed witch 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolated under reduced pressure at 80ºC to give 230 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 166 parts of an electrolyte (A7-1) of the present invention. As a result of analysis by ¹H-NMR, ¹⁹F-NMR, and ¹³C-NMR, the electrolyte (A7-1) was identified as a quaternary ammonium salt (having an ethyl group in place of the methyl group of the quaternary ammonium salt represented by the general formula (6) and corresponding to (a5) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A7-1) was uniformly mixed and dissolved in 80 parts of dehydrated propylene carbonate at 25ºC to form an electrolytic solution (19) of the present invention. The electrolytic solution (19) had a water content of 40 ppm.

### Example 20

### Synthesis of Quaternary Ammonium Iodide

To a glass beaker were added 100 parts of 1-azabicyclo[2,2,1]heptane (obtained in the same manner as in Example 14) and 300 parts of acetone to form a uniform solution. Under stirring, 172 parts of ethyl iodide was then slowly added dropwise to the solution and stirred at 30ºC for 3 hours. The precipitated white solid was separated by filtration and dried under reduced pressure at 80ºC to give 256 parts of a quaternary ammonium salt (A8') (having an ethyl group in place of the methyl group of the quaternary ammonium salt represented by the general formula (3) and corresponding to (a6) in Table 1, wherein X⁻ is an iodide ion).

### Preparation of BF₄ Salt

A mixed solution containing 253 parts of the quaternary ammonium salt (A8') and 253 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 206 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 146 parts of an electrolyte (A8-1) of the present invention. As a result of analysis by ¹H-NMR, ¹⁹F-NMR, and ¹³C-NMR, the electrolyte (A8-1) was identified as a quaternary ammonium salt (having an ethyl group in place of the methyl group of the quaternary ammonium salt represented by the general formula (3) and corresponding to (a6) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A8-1) was uniformly mixed and dissolved in 80 parts of dehydrated propylene carbonate at 25ºC to form an electrolytic solution (20) of the present invention. The electrolytic solution (20) had a water content of 29 ppm.

### Example 21

### Synthesis of Quaternary Ammonium Iodide

To a stainless steel autoclave equipped with a cooling condenser were added 113 parts of 1-azabicyclo[2,2,2]octane (Sigma-Aldrich Japan K.K.) and 339 parts of acetone to form a uniform solution. The solution was then heated to 50ºC, and 394 parts of a 50% by weight trifluoromethyl iodide acetone solution was added dropwise to the solution over 3 hours. The solution was then allowed to react at 80ºC. After 30 hours, the solution was cooled to 30ºC, taken out, and desolvated under reduced pressure at 80ºC to give 309 parts of a quaternary ammonium salt (A9') (having a trifluoromethyl group in place of the methyl group of the quaternary ammonium salt represented by the general formula (2) and corresponding to (a7) in Table 1, wherein X⁻ is an iodide ion),

### Preparation of BF₄ Salt

A mixed solution containing 307 parts of the quaternary ammonium salt (A9') and 307 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 258 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 189 parts of an electrolyte (A9-1) of the present invention. As a result of analysis by ¹H-NMR, ¹⁹F-NMR, and ¹³C-NMR, the electrolyte (A9-1) was identified as a quaternary ammonium salt (having a trifluoromethyl group in place of the methyl group of the quaternary ammonium salt represented by the general formula (2) and corresponding to (a7) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A9-1) was uniformly mixed and dissolved in 80 parts of dehydrated propylene carbonate at 25ºC to form an electrolytic solution (21) of the present invention. The electrolytic solution (21) had a water content of 28 ppm.

### Example 22

### Synthesis of Quaternary Ammonium Iodide

To a stainless steel autoclave equipped with a cooling condenser were added 125 parts of 1-azabicyclo[3,2,2]nonane (obtained in the same manner as in Example 13) and 375 parts of acetone to form a uniform solution. The solution was then heated to 50ºC, and 394 parts of a 50% by weight trifluoromethyl iodide acetone solution was added dropwise to the solution over 3 hours. The solution was then allowed to react at 80ºC. After 30 hours, the solution was cooled to 30ºC, taken out, and desolvated under reduced pressure at 80ºC to give 321 parts of a quaternary ammonium salt (A10') (having a trifluoromethyl group in place of the methyl group of the quaternary ammonium salt represented by the general formula (6) and corresponding to (a8) in Table 1, wherein X⁻ is an iodide ion).

### Preparation of BF₄ Salt

A mixed solution containing 321 parts of the quaternary ammonium salt (A10') and 321 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 270 parts of a white crystal.. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 200 parts of an electrolyte (A10-1) of the present invention. As a result of analysis by ¹H-NMR, ¹⁹F-NMR, and ¹³C-NMR, the electrolyte (A10-1) was identified as a quaternary ammonium salt (having a trifluoromethyl group in place of the methyl group of the quaternary ammonium salt represented by the general formula (6) and corresponding to (a8) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A10-1) was uniformly mixed and dissolved in 80 parts of dehydrated propylene carbonate at 25ºC to form an electrolytic solution (22) of the present invention. The electrolytic solution (22) had a water content of 34 ppm.

### Example 23

### Synthesis of Quaternary Ammonium Iodide

To a stainless steel autoclave equipped with a cooling condenser were added 100 parts of 1-azabicyclo[2,2,1]heptane (obtained in the same manner as in Example 14) and 300 parts of acetone to form a uniform solution. The solution was then heated to 50ºC, and 394 parts of a 50% by weight trifluoromethyl iodide acetone solution was added dropwise to the solution over 3 hours. The solution was then allowed to react at 80ºC. After 30 hours, the solution was cooled to 30ºC, taken out, and desolvated under reduced pressure at 80ºC to give 296 parts of a quaternary ammonium salt (A11') (having a trifluoromethyl group in place of the methyl group of the quaternary ammonium salt represented by the general formula (3) and corresponding to (a9) in Table 1, wherein X⁻ is an iodide ion).

### Preparation of BF₄ Salt

A mixed solution containing 293 parts of the quaternary ammonium salt (A11') and 293 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 244 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 178 parts of an electrolyte (A11-1) of the present invention. As a result of analysis by ¹H-NMR, ¹⁹F-NMR, and ¹³C-NMR, the electrolyte (A11-1) was identified as a quaternary ammonium salt (having a trifluoromethyl group in place of the methyl group of the quaternary ammonium salt represented by the general formula (3) and corresponding to (a9) in Table 1, wherein X⁻ is BF₄⁻ ion). The integrated value of the ¹H-NMR spectrum indicated a purity of 99% by mole.

### Preparation of Electrolytic Solution

Twenty parts of the electrolyte (A11-1) was uniformly mixed and dissolved in 80 parts of dehydrated propylene carbonate at 25ºC to form an electrolytic solution (23) of the present invention. The electrolytic solution (23) had a water content of 41 ppm.

### Example 24

After 143 parts of thionyl chloride was added to a liquid mixture of 115 parts of L-proline (Sigma-Aldrich, Inc.) and 385 parts of tetrahydrofuran, the resulting mixture was added dropwise to a mixed solution containing 138 parts of trimethylsilyldiazomethane and 362 parts of tetrahydrofuran and stirred at 20ºC for 1 hour to form a reaction mixture solution. The reaction mixture solution was then added dropwise to a 1% by weight sodium thiosulfate solution containing 231 parts of silver oxide suspended therein and stirred at 50ºC for 3 hours. The mixture was acidified with 15 parts of concentrated hydrochloric acid and then extracted with 1,000 parts of dimethyl ether. The ether layer was then desolvated under reduced pressure to give a solid. The resulting solid was extracted with 1,000 parts of diethyl ether, and the resulting ether layer was desolvated under reduced pressure to give 2-(3-hydroxypropyl)pyrrole.

A mixture of 157 parts of 2-(3-hydroxypropyl)pyrrole and 100 parts of ethanol was prepared, and 250 parts of sodium was gradually added to the mixture. The resulting mixture was refluxed for 6 hours and then cooled. After 250 parts of water was added to the mixture, the ethanol was evaporated under reduced pressure. The resulting residue was mixed and extracted with 200 parts of diethyl ether. The extract was desolvated under reduced pressure to give a colorless viscous liquid. Two-hundred-and-fifty parts of an aqueous concentrated hydriodic acid solution was gradually added dropwise to the liquid. After the mixture was further refluxed for 3 hours, 350 parts of an aqueous 50% by weight sodium hydroxide solution was added to the mixture and heated at 50ºC for 3 hours, so that a reaction mixture was obtained. The reaction mixture was then cooled to 30ºC and mixed and extracted with 800 parts of diethyl ether. Sodium carbonate was then added to the ether layer for drying. Diethyl ether was removed from the dried ether layer under reduced pressure at 10ºC. The residue was then distilled (180ºC, 2.7 kPa), so that a distillation product was obtained. As a result of ¹H-NMR analysis of the distillation product, it was found that the raw material signal disappeared and that 1-azabicyclo[3,3,0]octane was produced. The yield was 33% by weight.

### Synthesis of Quaternary Ammonium Iodide

To a glass beaker were added 113 parts of 1-azabicyclo[3,3,0]octane and 375 parts of acetone to form a uniform solution. Under stirring, 156 parts of methyl iodide was added dropwise to the solution over 1 hour and stirred at 30ºC for 3 hours. The precipitated white solid was separated by filtration and desolvated under reduced pressure at 80ºC to give 255 parts of a quaternary ammonium salt (A4') represented by the general formula (4) (corresponding to (a14) in Table 2, wherein X⁻ is an iodide ion).

### Preparation of BF₄ Salt

A mixed solution containing 253 parts of the quaternary ammonium salt (A4') and 253 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 206 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 144 parts of an electrolyte (A4-1) of the present invention. As a result of analysis by ¹H-NMR, ¹⁹F-NMR. and ¹³C-NMR, the electrolyte (A4-1) was identified as a quaternary ammonium salt represented by the general formula (4) (corresponding to (a14) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A4-1) was uniformly mixed and dissolved in 80 parts of dehydrated propylene carbonate at 25ºC to form an electrolytic solution (24) of the present invention. The electrolytic solution (24) had a water content of 35 ppm.

### Example 25

Twenty parts of the electrolyte (A4-1) was uniformly mixed and dissolved in 40 parts of dehydrated propylene carbonate and 40 parts of dehydrated dimethyl carbonate at 25ºC to form an electrolytic solution (25) of the present invention. The electrolytic solution (25) had a water content of 26 ppm.

### Example 26

Twenty parts of the electrolyte (A4-1) was uniformly mixed and dissolved in 80 parts of dehydrated sulfolane at 40ºC to form an electrolytic solution (26) of the present invention. The electrolytic solution (26) had a water content of 23 ppm.

### Example 27

### Preparation of PF₅ Salt

Eight-hundred-and-three parts of an AgPF₆ methanol solution (obtained in the same manner as in Example 11) was gradually added to a mixed solution containing 253 parts of the quaternary ammonium salt (A4') and 253 parts of methanol. The mixture was then filtered, and the filtrate was collected. The AgPF₆ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 262 parts of a white crystal. The silver ion content and the iodide ion content of the crystal were 5 ppm or less and 10 ppm or less, respectively. The crystal was mixed with 600 parts of methanol, dissolved at 30ºC, then cooled to -5ºC and allowed to stand for 12 hours for recrystallization. The precipitated crystal was separated by filtration and dried under reduced pressure at 80ºC to give 191 parts of an electrolyte (A4-2) of the present invention. As a result of analysis by ¹H-NMR, ¹⁹F-NMR, and ¹³C-NMR, the electrolyte (A4-2) was identified as a quaternary ammonium salt represented by the general formula (4) (corresponding to (a14) in Table 4, wherein X⁻ is PF₆⁻ ion). The integrated value of the ¹H-NMR spectrum indicated a purity of 99% by mole.

### Preparation of Electrolytic Solution

Twenty parts of the electrolyte (A4-2) was uniformly mixed and dissolved in 80 parts of dehydrated propylene carbonate at 25ºC to form an electrolytic solution (27) of the present invention. The electrolytic solution (27) had a water content of 28 ppm.

### Example 28

Eight-hundred-and-seven parts of an AgCF₃SO₃ methanol solution (obtained in the same manner as in Example 12) was gradually added to a mixed solution containing 253 parts of the quaternary ammonium salt (A4') and 253 parts of methanol. The mixture was then filtered, and the filtrate was collected. The AgCF₃SO₃ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 263 parts of a white crystal. The silver ion content and the iodide ion content of the crystal were 5 ppm. or less and 10 ppm or less, respectively. Six hundred parts of methanol was added to the crystal, cooled to -5ºC and allowed to stand for 12 hours for recrystallization. The precipitated crystal was separated by filtration and dried under reduced pressure at 80ºC to give 197 parts of an electrolyte (A4-3) of the present invention. As a result of analysis by ¹H-NMR, ¹⁹F-NMR, and ¹³C-NMR, the electrolyte (A4-3) was identified as a quaternary ammonium salt represented by the general formula (4) (corresponding to (a14) in Table 4, wherein X⁻ is CF₃SO₃⁻ ion). The integrated value of the ¹H-NMR spectrum indicated a purity of 99% by mole.

### Preparation of Electrolytic Solution

Twenty parts of the electrolyte (A4-3) was uniformly mixed and dissolved in 80 parts of dehydrated propylene carbonate at 25ºC to form an electrolytic solution (28) of the present invention. The electrolytic solution (28) had a water content of 36 ppm.

### Example 29

### Synthesis of 1-Azabicyclo[4,3,0]Nonane

A mixture of 137 parts of 2-pyridinepropanol (2-(3-hydroxypropyl)pyridine, Sigma-Aldrich Japan K.K.) and 1,000 parts of ethanol was prepared, and 250 parts of sodium was gradually added to the mixture. The mixture was refluxed for 6 hours and then cooled. After 250 parts of water was added to the mixture, the ethanol was evaporated under reduced pressure. The resulting residue was mixed and extracted with 200 parts of diethyl ether. The extract was then desolvated under reduced pressure to give a colorless viscous liquid. Two-hundred-and-fifty parts of an aqueous concentrated hydriodic acid solution was gradually added dropwise to the liquid. After the mixture was further refluxed for 3 hours, 350 parts of an aqueous 50% by weight sodium hydroxide solution was added to the mixture and heated at 50ºC for 3 hours, so that a reaction mixture was obtained. The reaction mixture was then cooled to 30ºC and mixed and extracted with 800 parts of diethyl ether. Sodium carbonate was then added to the ether layer for drying. Diethyl ether was removed from the dried ether layer under reduced pressure at 10ºC. The residue was then distilled (140ºC, 2.7 kPa), so that a distillation product was obtained. As a result of ¹H-NMR analysis of the distillation product, it was found that the raw material signal disappeared and that 1-azabicyclo[4,3,0]nonane was produced. The yield was 50% by weight.

### Synthesis of Quaternary Ammonium Iodide

To a glass beaker were added 125 parts of 1-azabicyclo[4,3,0]octane and 375 parts of acetone to form a uniform solution. Under stirring, 156 parts of methyl iodide was added dropwise to the solution over 1 hour and then stirred at 30ºC for 3 hours. The precipitated white solid was separated by filtration and desolvated under reduced pressure at 80ºC to give 267 parts of a quaternary ammonium salt (A12') represented by the general formula (7) (corresponding to (a15) in Table 2, wherein X⁻ is an iodide ion).

### Preparation of BF₄ Salt

A mixed solution containing 267 parts of the quaternary ammonium salt (A12') and 267 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 218 parts of a white crystal. The silver ion content and the iodide ion content of the crystal were 5 ppm or less and 10 ppm or less, respectively. Six hundred parts of methanol was added to the crystal, then cooled to -5ºC and allowed to stand for 12 hours for recrystallization. The precipitated crystal was separated by filtration and dried under reduced pressure at 80ºC to give 155 parts of an electrolyte (A12-1) of the present invention. As a result of analysis by ¹H-NMR, ¹⁹F-NMR, and ¹³C-NMR. the electrolyte (A12-1) was identified as a quaternary ammonium salt represented by the general formula (7) (corresponding to (a15) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A12-1) was uniformly mixed and dissolved in 80 parts of dehydrated propylene carbonate at 25ºC to form an electrolytic solution (29) of the present invention. The electrolytic solution (29) had a water content of 35 ppm.

### Example 30

### Synthesis of 1-Azabicyclo[4,4,0]Decane

A mixture of 137 parts of 2-pyridinepropanol (2-(3-hydroxypropyl)pyridine, Sigma-Aldrich Japan K.K.) and 1,000 parts of ethanol was prepared, and 250 parts of sodium was gradually added to the mixture. The mixture was refluxed for 6 hours and then cooled. After 250 parts of water was added to the mixture, the ethanol was evaporated under reduced pressure. The resulting residue was mixed and extracted with 200 parts of diethyl ether. The extract was then desolvated under reduced pressure to give a colorless viscous liquid. Two-hundred-and-fifty parts of an aqueous concentrated hydriodic acid solution was gradually added dropwise to the liquid. The mixture was further refluxed for 3 hours and then extracted with 550 parts of diethyl ether. After diethyl ether was removed from the extract under reduced pressure, 685 parts of tetrahydrofuran and 148 parts of sodium cyanide were added to the residue and stirred at 100ºC for 2 hours. The tetrahydrofuran was then removed from the mixture by desolvation under reduced pressure, and 685 parts of diethyl ether and 750 parts of water were added to the residue. The residue was then extracted with the ether, and the ether layer was desolvated under reduced pressure to give a colorless liquid. The liquid was added to an aqueous solution containing 500 parts of concentrated sulfuric acid and 750 parts of water and refluxed for 6 hours. After the reaction, the mixture was cooled to OºC, and the precipitated solid (2-(4-hydroxybutyl)pyridine) was separated by filtration.

A mixed solution containing 165 parts of the resulting solid (2-(4-hydroxybutyl)pyridine) and 335 parts of tetrahydrofuran was slowly added dropwise to the mixed solution containing 120 parts of lithium aluminum hydride and 380 parts of tetrahydrofuran while the temperature was kept at 10ºC. The mixture was then returned to room temperature (about 25ºC) and then refluxed for 16 hours. The resulting solution was desolvated under reduced pressure. After 100 parts of diethyl ether was added to the residue, the insoluble substance was separated by filtration. The ether layer was desolvated under reduced pressure to give a colorless clear liquid. Two-hundred-and-fifty parts of an aqueous concentrated hydriodic acid solution was gradually added dropwise to the liquid. After the mixture was further refluxed for 3 hours, 350 parts of an aqueous 50% by weight sodium hydroxide solution was added to the mixture and heated at 50ºC for 3 hours, so that a reaction mixture was obtained. The reaction mixture was then cooled to 30ºC and mixed and extracted with 800 parts of diethyl ether. Sodium carbonate was then added to the ether layer for drying. Diethyl ether was removed from the dried ether layer under reduced pressure at 10ºC. The residue was then distilled (140ºC, 2.7 kPa), so that a distillation product was obtained. As a result of ¹H-NMR analysis of the distillation product, it was found that the raw material signal disappeared and that 1-azabicyclo[4,4,0]decane was produced. The yield was 35% by weight.

### Synthesis of Quaternary Ammonium Iodide

To a glass beaker were added 141 parts of 1-azabicyclo[4,4,0]decane and 375 parts of acetone to form a uniform solution. Under stirring, 156 parts of methyl iodide was added dropwise to the solution over 1 hour and stirred at 30ºC for 3 hours. The precipitated white solid was separated by filtration and desolvated under reduced pressure at 80ºC to give 283 parts of a quaternary ammonium salt (A13') represented by the general formula (8) (corresponding to (a16) in Table 2, wherein X⁻ is an iodide ion).

### Preparation of BF₄ Salt

A mixed solution containing 281 parts of the quaternary ammonium salt (A13') and 281 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 232 parts of a white crystal. The silver ion content and the iodide ion content of the crystal were 5 ppm or less and 10 ppm or less, respectively. Six hundred parts of methanol was added to the crystal, then cooled to -5ºC, and allowed to stand for 12 hours for recrystallization. The precipitated crystal was separated by filtration and dried under reduced pressure at 80ºC to give 167 parts of an electrolyte (A13-1) of the present invention. As a result of analysis by ¹H-NMR, ¹⁹F-NMR, and ¹³C-NMR, the electrolyte (A13-1) was identified as a quaternary ammonium salt represented by the general formula (8) (corresponding to (a16) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A13-1) was uniformly mixed and dissolved in 80 parts of dehydrated propylene carbonate at 25ºC to form an electrolytic solution (30) of the present invention. The electrolytic solution (30) had a water content of 24 ppm.

### Examples 31

### Synthesis of Quaternary Ammonium Iodide

To a glass beaker were added 113 parts of 1-azabicyclo[3,3,0]octane (obtained in the same manner as in Example 24) and 339 parts of acetone to form a uniform solution. Under stirring, 172 parts of ethyl iodide was then gradually added dropwise to the solution and stirred at 30ºC for 3 hours. The precipitated white solid was separated by filtration and desolvated under reduced pressure at 80ºC to give 269 parts of a quaternary ammonium salt (A14') (halving an ethyl group in place of the methyl group of the quaternary ammonium salt represented by the general formula (4) and corresponding to (a17) in Table 2, wherein X⁻ is an iodide ion).

### Preparation of BF₄ Salt

A mixed solution containing 267 parts of the quaternary ammonium salt (A14') and 267 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 218 parts of a white crystal. The silver ion content and the iodide ion content of the crystal were 5 ppm or less and 10 ppm or less, respectively. Six hundred parts of methanol was added to the crystal, then cooled to -5ºC, and allowed to stand for 12 hours for recrystallization. The precipitated crystal was separated by filtration and dried under reduced pressure at 80ºC to give 155 parts of an electrolyte (A14-1) of the present invention. As a result of analysis by ¹H-NMR, ¹⁹F-NMR, and ¹³C-NMR, the electrolyte (A14-1) was identified as a quaternary ammonium salt (having an ethyl group in place of the methyl group of the quaternary ammonium salt represented by the general formula (4) and corresponding to (a17) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A14-1) was uniformly mixed and dissolved in 80 parts of dehydrated propylene carbonate at 25ºC to form an electrolytic solution (31) of the present invention. The electrolytic solution (31) had a water content of 23 ppm.

### Example 32

### Synthesis of Quaternary Ammonium Iodide

To a glass beaker were added 125 parts of 1-azabicyclo[4,3,0]nonane (obtained in the same manner as in Example 29) and 375 parts of acetone to form a uniform solution. Under stirring, 172 parts of ethyl iodide was then added dropwise to the solution over 1 hour and stirred at 30ºC for 3 hours. The precipitated white solid was separated by filtration and desolvated under reduced pressure at 80ºC to give 281 parts of a quaternary ammonium salt (A15') (having an ethyl group in place of the methyl group of the quaternary ammonium salt represented by the general formula (7) and corresponding to (a18) in Table 2, wherein X⁻ is an iodide ion).

### Preparation of BF₄ Salt

A mixed solution containing 281 parts of the quaternary ammonium salt (A15') and 281 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 230 parts of a white crystal. Six hundred parts of methanol was added to the resulting crystal, then cooled to -5ºC, and allowed to stand for 12 hours for recrystallization. The precipitated crystal was separated by filtration and dried under reduced pressure at 80ºC to give 166 parts of an electrolyte (A15-1) of the present invention. As a result of analysis by ¹H-NMR, ¹⁹F-NMR, and ¹⁴C-NMR, the electrolyte (A15-1) was identified as a quaternary ammonium salt (having an ethyl group in place of the methyl group of the quaternary ammonium salt represented by the general formula (7) and corresponding to (a18) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A15-1) was uniformly mixed and dissolved in 80 parts of dehydrated propylene carbonate at 25ºC to form an electrolytic solution (32) of the present invention. The electrolytic solution had a water content of 37 ppm.

### Example 33

### Synthesis of Quaternary Ammonium Iodide

To a glass beaker were added 140 parts of 1-azabicyclo[4,4,0]decane (obtained in the same manner as in Example 30) and 300 parts of acetone to form a uniform solution. Under stirring, 172 parts of ethyl iodide was then added dropwise to the solution over 1 hour and stirred at 30ºC for 3 hours. The precipitated white solid was separated by filtration and desolvated under reduced pressure at 80ºC to give 296 parts of a quaternary ammonium salt (A16') (having an ethyl group in place of the methyl group of the quaternary ammonium salt represented by the general formula (8) and corresponding to (a19) in Table 2, wherein X⁻ is an iodide ion).

### Preparation of BF₄ Salt

A mixed solution containing 295 parts of the quaternary ammonium salt (A16') and 295 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 244 parts of a white crystal. The silver ion content and the iodide ion content of the crystal were 5 ppm or less and 10 ppm or less, respectively. Six hundred parts of methanol was added to the crystal, then cooled to -5ºC, and allowed to stand for 12 hours for recrystallization. The precipitated crystal was separated by filtration and dried under reduced pressure at 80ºC to give 183 parts of an electrolyte (A16-1) of the present invention. As a result of analysis by ¹H-NMR, ¹⁹F-NMR, and ¹³C-NMR, the electrolyte (A16-1) was identified as a quaternary ammonium salt (having an ethyl group in place of the methyl group of the quaternary ammonium salt represented by the general formula (8) and corresponding to (a19) in Table 2, wherein X⁻ is BF₄ ion). The integrated value of the ¹H-NMR spectrum indicated a purity of 99% by mole.

### Preparation of Electrolytic Solution

Twenty parts of the electrolyte (A16-1) was uniformly mixed and dissolved in 80 parts of dehydrated propylene carbonate at 25ºC to form an electrolytic solution (33) of the present invention. The electrolytic solution (33) had a water content of 45 ppm.

### Example 34

### Synthesis of Quaternary Ammonium Iodide

To a stainless steel autoclave equipped with a cooling condenser were added 113 parts of 1-azabicyclo[3,3,0]octane (obtained in the same manner as in Example 24) and 339 parts of acetone to form a uniform solution. The solution was then heated to 50ºC, and 394 parts of a 50% by weight trifluoromethyl iodide acetone solution was added dropwise to the solution over 3 hours. The solution was then allowed to react at 80ºC. After 30 hours, the solution was cooled to 30ºC. The solution was desolvated under reduced pressure at 80ºC to give 309 parts of a quaternary ammonium salt (A17') (having a trifluoromethyl group in place of the methyl group of the quaternary ammonium salt represented by the general formula (4) and corresponding to (a20) in Table 2, wherein X⁻ is an iodide ion).

### Preparation of BF₄ Salt

A mixed solution containing 307 parts of the quaternary ammonium salt (A17') and 307 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 258 parts of a white crystal. The silver ion content and the iodide ion content of the crystal were 5 ppm or less and 10 ppm or less, respectively. Six hundred parts of methanol was added to the crystal, then cooled to -5ºC, and allowed to stand for 12 hours for recrystallization. The precipitated crystal was separated by filtration and dried under reduced pressure at 80ºC to give 191 parts of an electrolyte (A17-1) of the present invention. As a result of analysis by ¹H-NMR, ¹⁹F-NMR, and ¹³C-NMR, the electrolyte (A17-1) was identified as a quaternary ammonium salt (having a trifluoromethyl group in place of the methyl group of the quaternary ammonium salt represented by the general formula (4) and corresponding to (a20) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A17-1) was uniformly mixed and dissolved in 80 parts of dehydrated propylene carbonate at 25ºC to form an electrolytic solution (34) of the present invention. The electrolytic solution (34) had a water content of 48 ppm.

### Example 35

### Synthesis of Quaternary Ammonium Iodide

To a stainless steel autoclave equipped with a cooling condenser were added 125 parts of 1-azabicyclo[4,3,0]nonane (obtained in the same manner as in Example 29) and 375 parts of acetone to form a uniform solution. The solution was then heated to 50ºC, and 394 parts of a 50% by weight trifluoromethyl iodide acetone solution was added dropwise to the solution over 3 hours. The solution was then allowed to react at 80ºC. After 30 hours, the solution was cooled to 30ºC. The solution was desolvated under reduced pressure at 80ºC to give 321 parts of a Quaternary ammonium salt (A18') (having a trifluoromethyl group in place of the methyl group of the quaternary ammonium salt represented by the general formula (7) and corresponding to (a21) in Table 2, wherein X⁻ is an iodide ion).

### Preparation of BF₄ Salt

A mixed solution containing 321 parts of the quaternary ammonium salt (A18') and 321 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 1.0 ppm or less and 5 ppm or less, respectively. The product was then filtered, and the filtrate was collected. The filtrate was desolvated under reduced pressure at 80ºC to give 270 parts of a white crystal. The silver ion content and the iodide ion content of the crystal were 5 ppm or less and 10 ppm or less, respectively. Six hundred parts of methanol was added to the crystal, then cooled to -5ºC, and allowed to stand for 12 hours for recrystallization. The precipitated crystal was separated by filtration and dried under reduced pressure at 80ºC to give 202 parts of an electrolyte (A18-1) of the present invention. As a result of analysis by ¹H-NMR, ¹⁹F-NMR, and ¹³C-NMR, the electrolyte (A18-1) was identified as a quaternary ammonium salt (having a trifluoromethyl group in place of the methyl group of the quaternary ammonium salt represented by the general formula (7) and corresponding to (a21) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A18-1) was uniformly mixed and dissolved in 80 parts of dehydrated propylene carbonate at 25ºC to form an electrolytic solution (35) of the present invention. The electrolytic solution (35) had a water content of 39 ppm.

### Example 36

### Synthesis of Dibenzothiophene Sulfonate

To a stainless steel autoclave equipped with a cooling condenser were added 139 parts of 1-azabicyclo[4,4,0]decane (obtained in the same manner as in Example 30) and 339 parts of acetone to form a uniform solution. The solution was then heated to 50ºC, and 758 parts of a solution of 50% by weight S-(trifluoromethyl)dibenzothiophenium-3-sulfonate (MEC-21, chemical formula (9), Daikin Industries. Ltd.) in acetone was gradually added dropwise to the solution. The solution was then allowed to react at 80ºC. After 30 hours, the solution was cooled to 30ºC. The solution was desolvated under reduced pressure at 80ºC to give 390 parts of a quaternary ammonium salt (A19') (having a trifluoromethyl group in place of the methyl group of the quaternary ammonium salt represented by the general formula (8) and corresponding to (a22) in Table 2, wherein X⁻ is a dibenzothiophene sulfonate ion).

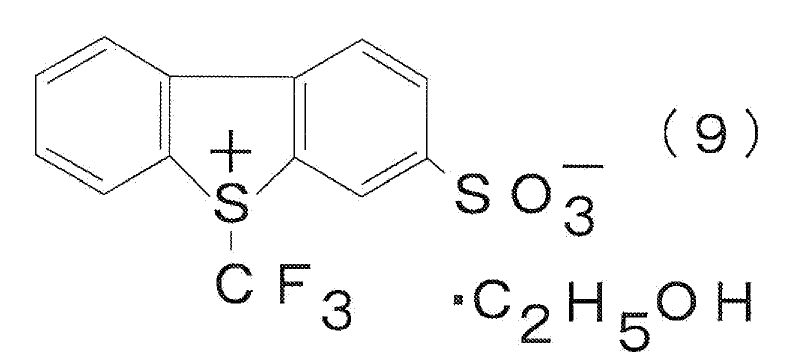

### Preparation of BF₄ Salt

A mixed solution containing 389 parts of the dibenzothiophene sulfonate (A19') and 389 parts of methanol was slowly mixed with 745 parts of an AgBF₄ methanol solution (obtained in the same manner as in Example 1). The mixture was then filtered, and the filtrate was collected. The AgBF₄ methanol solution or the mixed solution was added little by little to the collected filtrate so that the silver ion content and the iodide ion content of the filtrate were finely adjusted to 10 ppm or less and 5 ppm or less, respectively. The product was then filtered, and the filtrate was collected. The filtrate was desolvated under reduced pressure at 80ºC to give 258 parts of a white crystal. The silver ion content and the iodide ion content of the crystal were 5 ppm or less and 10 ppm or less, respectively. Six hundred parts of methanol was added to the crystal and then cooled to -5ºC. The precipitated crystal was separated by filtration and dried under reduced pressure at 80ºC to give 188 parts of an electrolyte (A19-1) of the present invention. As a result of analysis by ¹H-NMR, ¹⁹F-NMR, and ¹³C-NMR, the electrolyte (A19-1) was identified as a quaternary ammonium salt (having a trifluoromethyl group in place of the methyl group of the quaternary ammonium salt represented by the general formula (8) and corresponding to (a22) in Table 2, wherein X⁻ is BF₄⁻ ion). The integrated value of the ¹H-NMR spectrum indicated a purity of 99% by mole.

### Preparation of Electrolytic Solution

Twenty parts of the electrolyte (A19-1) was uniformly mixed and dissolved in 80 parts of dehydrated propylene carbonate at 25ºC to form an electrolytic solution (36) of the present invention. The electrolytic solution (36) had a water content of 30 ppm.

### Comparative Example 1

### Synthesis of Quaternary Spiro-Ammonium Salt

A uniform mixture of 488 parts of 1,6-dibromohexane (Sigma-Aldrich Japan K.K.), 200 parts of an aqueous 40% by weight sodium hydroxide solution, and 150 parts of water was prepared, and 170 parts of piperidine (Sigma-Aldrich Japan K.K.) was gradually added to the liquid mixture, refluxed for 3 hours, and then cooled to 30ºC. The mixture was mixed and extracted with 800 parts of diethyl ether, so that an ether layer was obtained. The ether layer was allowed to stand at - 5ºC for 12 hours so that a crystal was precipitated. The crystal was separated by filtration and dried under reduced pressure at 80ºC to give a white crystal. As a result of ¹H-NMR analysis, the white crystal was identified as spire(1,1')-bipiperidinium bromide.

### Preparation of BF₄ Salt

After 188 parts of an AgBF₄ methanol solution (obtained in the same manner as in Example 1) was slowly added dropwise to 198 parts of the white crystal, the mixture was filtered, and the filtrate was collected. The AgBF₄ methanol solution or the white crystal was added little by little to the collected filtrate so that the silver ion content and the bromide ion content of the filtrate were finely adjusted to 10 ppm or less and 5 ppm or less, respectively. The product was then filtered, and the filtrate was collected. The filtrate was desolvated under reduced pressure at 80ºC to give 174 parts of a white crystal. The silver ion content and the bromide ion content of the crystal were 5 ppm or less and 10 ppm or less, respectively. The crystal was mixed with 600 parts of methanol, dissolved at 30ºC, then cooled to -5ºC, and allowed to stand for 12 hours for recrystallization. The precipitated crystal was separated by filtration and dried under reduced pressure at 80ºC to give 115 parts of an electrolyte (white crystal) for comparison. As a result of analysis by ¹H-NMR, ¹⁹F-NMR, and ¹³C-NMR, the electrolyte for comparison was identified as a salt of spiro (1, 1') bipiperidinium with BF₄ (hereinafter abbreviated as "SPR"). The integrated value of the ¹H-NMR spectrum indicated a purity of 99% by mole.

Twenty parts of SPR was uniformly mixed and dissolved in 80 parts of dehydrated propylene carbonate at 25ºC to form an electrolytic solution (H1) for comparison. The electrolytic solution (H1) had a water content of 36 ppm.

### Comparative Example 2

SPR was uniformly mixed and dissolved in 40 parts of dehydrated propylene carbonate and 40 parts of dimethyl carbonate at 25ºC to form an electrolytic solution (H2) for comparison. The electrolytic solution (H2) had a water content of 34 ppm.

### Comparative Example 3

SRP was uniformly mixed and dissolved in 80 parts of dehydrated sulfolane at 40ºC to form an electrolytic solution (H3) for comparison. The electrolytic solution (H3) had a water content of 37 ppm.

### Comparative Example 4

Twenty parts of a salt of tetraethylammonium with BF₄ (hereinafter abbreviated as "TEA", Sigma-Aldrich Japan K.K.) was uniformly mixed and dissolved at 25°C in 80 parts of dehydrated propylene carbonate to form an electrolytic solution (H4) for comparison. The electrolytic solution (H4) had a water content of 33 ppm.

### Comparative Example 5

### Synthesis of 1-Methyl-1-Azabicyclo[2,2.2]Octane-Ium Carbonate

To a stainless steel autoclave equipped with a reflux condenser were added 220 parts of 1-azabicyclo[2,2,2]octane (Sigma-Aldrich Japan K.K.), 270 parts of dimethyl carbonate, and 376 parts of methanol to form a uniform solution. The solution was then heated to 130ºC and allowed to react under a pressure of 0.8 MPa for 80 hours to give a solution of 1-methyl-1-azabicyclo[2,2,2]octane-ium carbonate in methanol. The chemical structure was identified by ¹H-NMR.

### Preparation of Benzoate

To a flask was added 375 parts of the solution of 1-methyl-1-azabicyclo[2,2,2]octane-ium carbonate in methanol. Under stirring, 155 parts of a 40% by weight benzoic acid methanol solution was gradually added dropwise thereto at 50ºC over about 3 hours. After the generation of carbon dioxide gas stopped, the reaction liquid was transferred to a rotary evaporator, and the solvent was entirely removed, so that 136 parts of a light yellow-while solid was obtained. To a stainless steel autoclave were added 130 parts of the light yellow-white solid and 1,400 parts of ethanol to form a solution at 30ºC. The solution was then cooled to -5ºC and allowed to stand for 12 hours for recrystallization. The precipitated crystal was separated by filtration and dried under reduced pressure at 80ºC to give 80 parts of an electrolyte for comparison (1-methyl-1-azabicyclo[2,2,2]octane-ium benzoate (hereinafter abbreviated as "MAOIA"). The structure was identified by ¹H-NMR and ¹³C-NMR. The integrated value of the ¹H-NMR spectrum indicated a purity of 99% by mole.

### Preparation of Electrolytic Solution

Twenty parts of MAOIA was uniformly mixed and dissolved in 80 parts of dehydrated propylene carbonate at 25ºC to form an electrolytic solution (H5) for comparison. The electrolytic solution (H5) had a water content of 33 ppm.

### Comparative Example 6

### Synthesis of 1-Methyl-1-Azabicyclo[2,2,2]Octane-Ium succinate

To a flask was added 370 parts of a solution of 1-methyl-1-azabicyclo[2,2,2]octane-ium carbonate in methanol. Under stirring, 175 parts of a 32% by weight succinic acid methanol solution was gradually added dropwise thereto at 50ºC over about 3 hours. After the generation of carbon dioxide gas stopped, the reaction liquid was transferred to a rotary evaporator, and the solvent was entirely removed, so that 126 parts of a light yellow-while solid was obtained. To a stainless steel autoclave were added 130 parts of the light yellow-white solid and 1,400 parts of ethanol to form a solution at 30ºC. The solution was then cooled to -5ºC and allowed to stand for 12 hours for recrystallization. The precipitated crystal was separated by filtration and dried under reduced pressure at 80ºC to give 76 parts of an electrolyte for comparison (1-methyl-1-azabicyclo[2,2,2]octane-ium succinate (hereinafter abbreviated as "MAOIC"). The structure was identified by ¹H-NMR and ¹³C-NMR. The integrated value of the ¹H-NMR spectrum indicated a purity of 99% by mole.

### Preparation of Electrolytic Solution

Twenty parts of MAOIC was uniformly mixed and dissolved in 80 parts of dehydrated propylene carbonate at 25ºC to form an electrolytic solution (H6) for comparison. The electrolytic solution (H6) had a water content of 35 ppm.

The electrolytic solution obtained in each of the examples and the comparative examples was measured for electrical conductivity (30ºC). Polarization was also measured at a scanning potential rate of 5 mV/second using a glassy carbon electrode (6 mm in outer diameter, 1 mm in inner diameter, BAS Inc.). Specifically, the potential against an Ag/Ag⁺ reference electrode at a current of 10 µA/cm² was defined as an oxidation potential, while the potential against an Ag/Ag⁺ reference electrode at a current of -10 µA/cm² was defined as a reduction potential, and a potential window was calculated from the difference between the oxidation and reduction potentials. The results are shown in Tables 3 and 4.

Solvent symbols are as follows: PC, propylene carbonate; DMC, dimethyl carbonate; SL, sulfolane; EC, ethylene carbonate; AN, acetonitrile; 3MSL, 3-methylsulfolane; BC, butylene carbonate; EMC, ethyl methyl carbonate; γ-BL, γ-butyrolactone; DEC, diethyl carbonate.

Tables 3 and 4 show that the electrolytic solutions of Examples 1 to 37 have significantly larger potential windows and higher electrochemical stability than the electrolytic solutions of Comparative Examples 1 to 6.

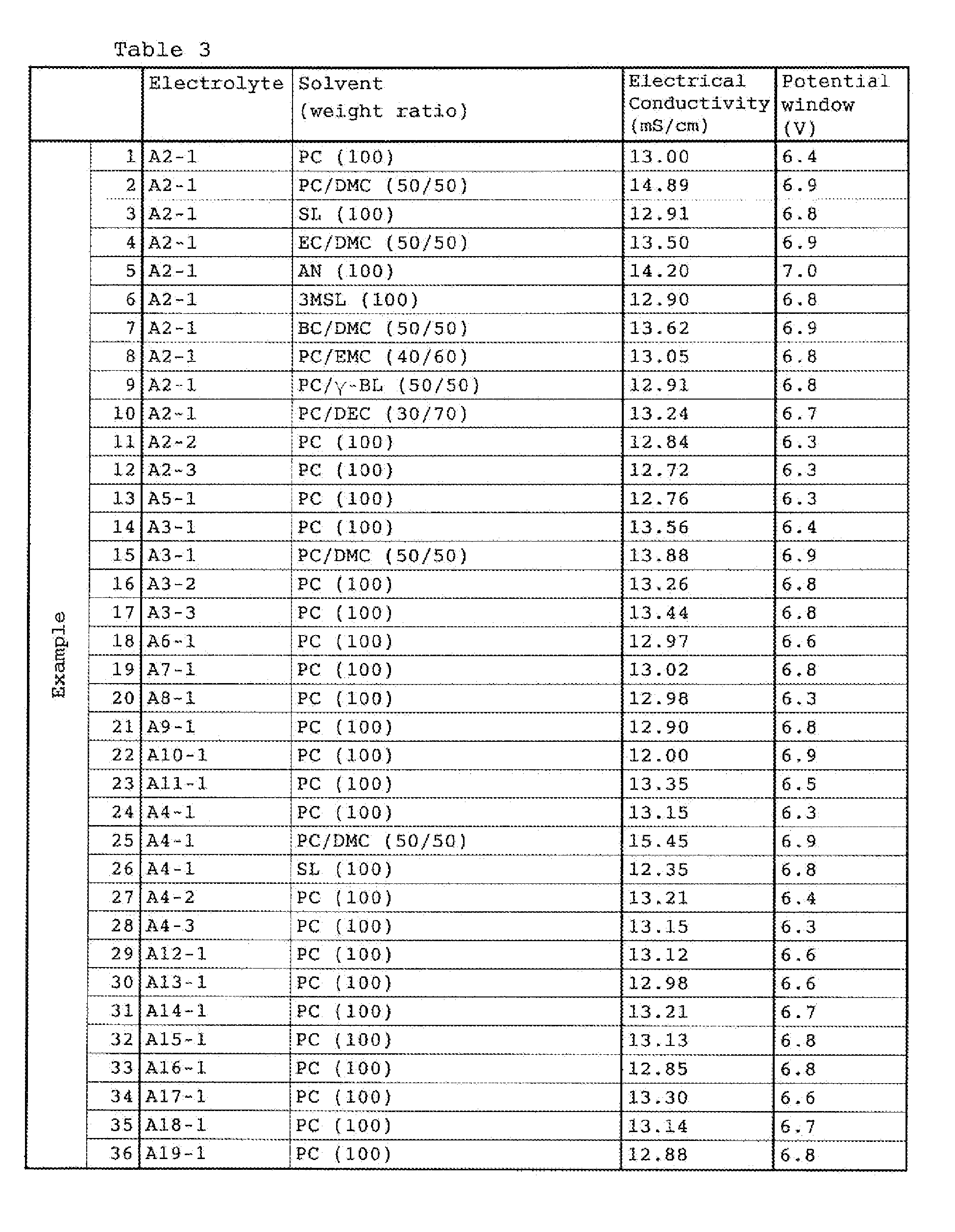

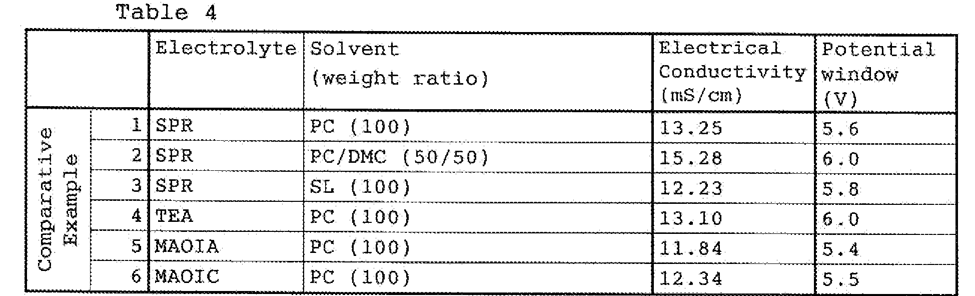

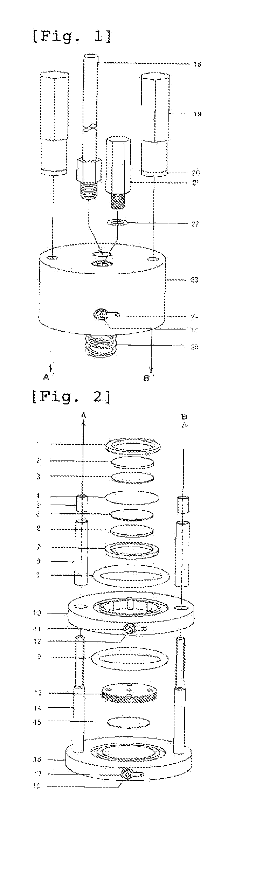

A three-electrode type electric double-layer capacitor (Power Systems Co., Ltd., see Fig. 1) was fabricated as described below using the electrolytic solution obtained in each of the examples and the comparative examples. A charge-discharge cycle test was performed on the capacitor, and the capacitance, internal resistance, and leakage current were evaluated.

Powdery activated carbon (MSP-20, Kansai Coke and Chemicals Co., Ltd.), carbon black (AB-3, Denki Kagaku Kogyo Kabushiki Kaisha), and polytetrafluoroethylene powder (PTFE F-104, Daikin Industries, Ltd.) were uniformly mixed in a weight ratio of 10:1:1.
After the uniform mixture was then kneaded in a mortar for about 5 minutes, the mixture was rolled using a roll press so that an activated carbon sheet with a thickness of 400 µm was obtained. The activated carbon sheet was formed into 20 mmf disks by punching, so that activated carbon electrodes were obtained.

A three-electrode type electric double-layer capacitor (Power Systems Co., Ltd.) was assembled using the activated carbon electrodes (positive, negative, and reference electrodes). The resulting capacitor cell was dried in vacuum at 170ºC for 7 hours and then cooled to 30ºC. Thereafter, the electrolytic solution was injected into the cell in a dry atmosphere and then infiltrated under vacuum, so that an electric double-layer capacitor for evaluation was fabricated.

A charge-discharge test system (CDT-5R2-4, Power Systems Co., Ltd.) was connected to the electric double-layer capacitor. Constant-current charge was performed at 25 mA until the set voltage was reached, and 7,200 seconds after the start of the charge, constant-current discharge was performed at 25 mA. At a set voltage of 3.3 V and 45ºC, 50 cycles of this process were performed, and the capacitance and the internal resistance were measured at the initial stage and after the 50 cycles. The capacitance retention rate (%) and the internal resistance increase rate (%) were each calculated from the initial value (X0) and the value after the 50 cycles (X50) ((X50) x 100/(X0)). The leakage current was also measured during the constant-voltage charge at the 50th cycle. The results are shown in Tables 5 and 6.

Tables 5 and 6 clearly show that the electric double-layer capacitors using the electrolytic solutions of Examples 1 to 37 have higher capacitance retention rates, lower internal resistance increase rates, and higher withstand voltages than the electric double-layer capacitors using the electrolytic solutions of Comparative Examples 1 to 6. The significantly low leakage currents indicate that the electrolytic solutions have high electrochemical stability. It is therefore apparent that the electrolytic solution of the present invention dramatically improves the performance of electrochemical capacitors, which would otherwise be deteriorated over time, and can provide highly reliable electrochemical devices.

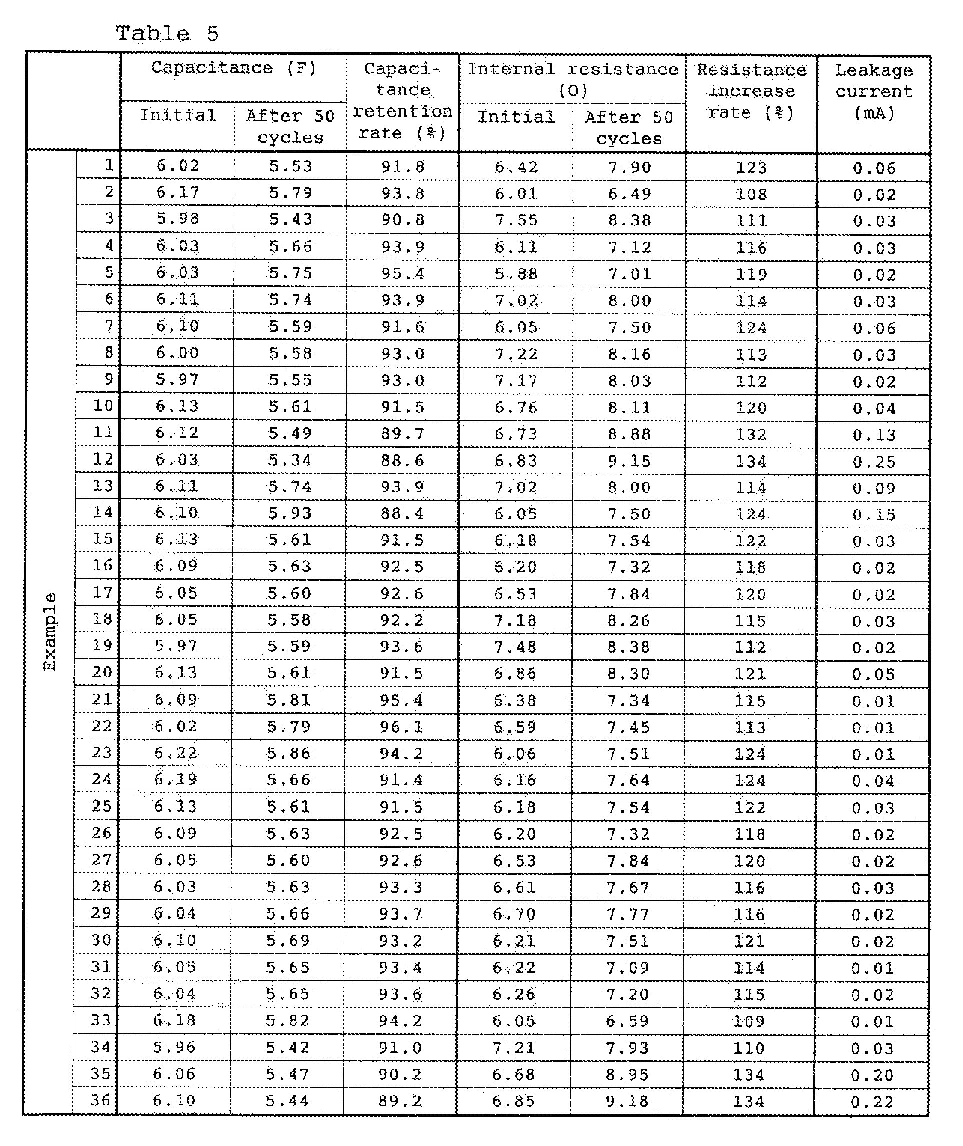

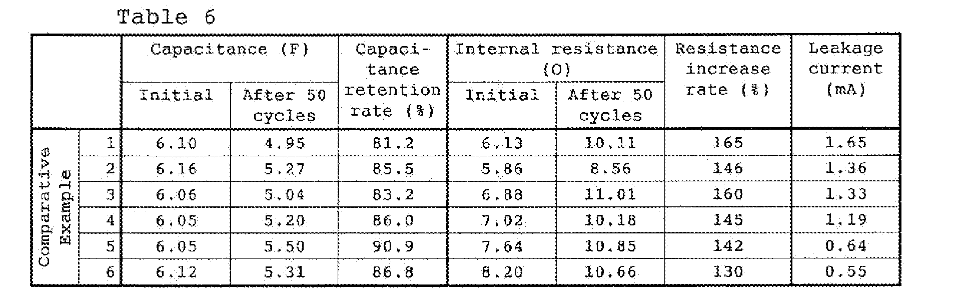

### INDUSTRIAL APPLICABILITY

The electrolyte of the present invention has very high withstand voltage, and therefore, the electrolytic solution therewith can be used to manufacture electrochemical devices that are less likely to undergo deterioration of performance over time. Accordingly, the electrolyte of the present invention makes it possible to produce electrochemical devices having high energy density and good charge-discharge cycle characteristics. Such electrochemical devices may be used as electrochemical capacitors, secondary cells, dye-sensitized solar cells, or the like.

### BRIEF DESCRIPTION OF DRAWINGS

Fig. 1 is a perspective view schematically showing the relationship between components (around a top cover) of a three-electrode type electric double-layer capacitor used for the evaluation of the electrolytic solutions in the examples.
Fig. 2 is a perspective view schematically showing the relationship between components (around the main body) of the three-electrode type electric double-layer capacitor used for the evaluation of the electrolytic solutions in the examples.

### REFERENCE SIGNS LIST

- 1: guide
- 2: collector electrode
- 3: polarizing electrode
- 4: separator
- 5: 4f poly(tetrafluoro)ethylene tube
- 6: polarizing electrode
- 7: guide
- 8: 6f poly(tetrafluoro)ethylene tube
- 9: O-ring (large size)
- 10: main body
- 11: terminal lug
- 12: M3 sems screw
- 13: partition plate
- 14: fixation shaft
- 15: reference electrode
- 16: bottom cover
- 17: terminal lug
- 18: pipe adaptor
- 19: fixation nut
- 20: poly(tetrafluoro)ethylene washer
- 21: liquid injection plug
- 22: O-ring (small size)
- 23: top cover
- 24: terminal lug
- 25: spring

## Claims

1. An electrolyte (B) comprising a quaternary ammonium salt (A) represented by the following general formula (1): 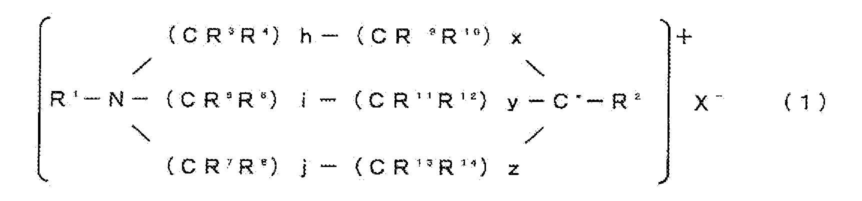 wherein
R¹ represents a monovalent hydrocarbon group having 1 to 10 carbon atoms, which may have at least one group selected from the group consisting of a halogen atom, a hydroxyl group, a nitro group, a cyano group, and a group having an ether bond;
R² represents a monovalent hydrocarbon group having 1 to 10 carbon atoms, which may have at least one group selected from the group consisting of a halogen atom, a nitro group, a cyano group, and a group having an ether bond, a hydrogen atom, or a halogen atom; R³ to R¹⁴ each represent an alkyl group having 1 to 5 carbon atoms, a fluoroalkyl group having 1 to 5 carbon atoms, a hydrogen atom, or a halogen atom and may be the same or different from each other;
C and C* each represent a carbon atom; N represents a nitrogen atom;
h, i, j, x, y, and z are each an integer of 0 to 6 and may be the same or different from each other; (h+x) is an integer of 0 to 6; (i+y) and (j+z) are each an integer of 1 to 6; provided that when (h+x) is 0, a nitrogen atom represented by N and a carbon atom represented by C* are directly bonded to each other; and
X⁻ represents a counter anion having a HOMO energy of -0.60 to -0.20 a.u. as determined by the first-principle calculation on molecular orbital of the counter anion.

2. The electrolyte (B) according to claim 1, wherein h, i, j, x, y, and z each an integer of 0 to 4, (h+x) is an integer of 0 to 4, and (i+y) and (j+z) are each an integer of 2 to 4.

3. The electrolyte (B) according to claim 1 or 2, wherein in the general formula (1), R¹ is a methyl group, an ethyl group, a trifluoromethyl group, or a pentafluoroethyl group, R² is a methyl group, an ethyl group, a trifluoromethyl group, a pentafluoroethyl group, or a hydrogen atom, and (h+x) is 2.

4. The electrolyte (B) according to claim 1 or 2, wherein in the general formula (1), R¹ is a methyl group, an ethyl group, a trifluoromethyl group, or a pentafluoroethyl group, R² is a methyl group, an ethyl group, a trifluoromethyl group, a pentafluoroethyl group, or a hydrogen atom, and (h+x) is 0.

5. The electrolyte (B) according to any one of claims 1 to 4, wherein in the general formula (1), the counter ion X⁻ is at least one selected from the group consisting of BF₄⁻, PF₆⁻, AsF₆⁻, SbF₆⁻, N(RfSO₃)₂⁻, C(RfSO₃)₃⁻ and RfSO₃⁻ (wherein Rf represents a fluoroalkyl group having 1 to 12 carbon atoms).

6. The electrolyte (B) according to claim 1, 2, 3, or 5, wherein the quaternary ammonium salt (A) is a compound (A2) represented by formula (2):

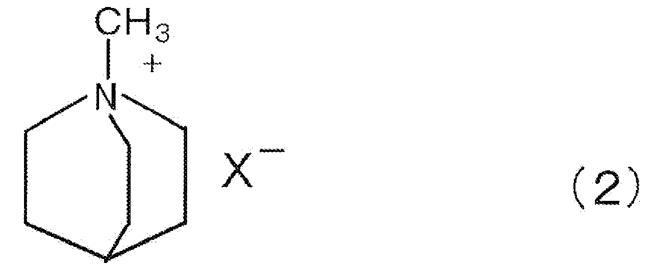

7. The electrolyte (B) according to claim 1, 2, 3, or 5, wherein the quaternary ammonium salt (A) is a compound (A3) represented by the following general formula (3):

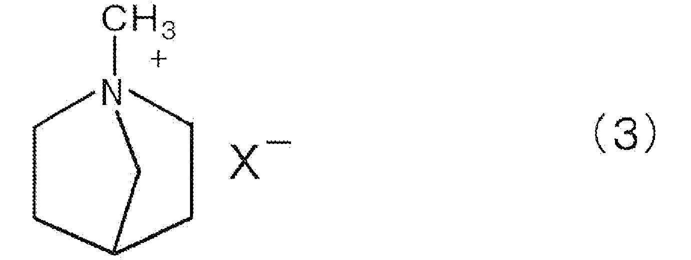

8. An electrolytic solution comprising the electrolyte (B) according to any one of claims 1 to 7 and a nonaqueous solvent (C).

9. The electrolytic solution according to claim 8, wherein the nonaqueous solvent (C) is at least one selected from the group consisting of propylene carbonate, ethylene carbonate, butylene carbonate, sulfolane, 3-methylsulfolane, acetonitrile, γ-butyrolactone, dimethyl carbonate, ethyl methyl carbonate, diethyl carbonate, xylene, chlorobenzene, 1,2-dichlorobenzene, 1,3-dichlorobenzene, and 1,4-dichlorobenzene.

10. An electrolytic solution for an electrochemical element, comprising the electrolyte (B) according to any one of claims 1 to 7.

11. The electrolytic solution according to claim 8 or 9, which is used for an electrochemical element.

12. An electrochemical device using the electrolytic solution according to any one of claims 8 to 11.

13. An electrochemical capacitor using the electrolytic solution according to any one of claims 8 to 11.

14. An electric double-layer capacitor using the electrolytic solution according to any one of claims 8 to 11.
